(19) Europäisches Patentamt / European Patent Office / Office européen des brevets

(11) **EP 2 451 641 B1**

(12) **EUROPEAN PATENT SPECIFICATION**

(45) Date of publication and mention
of the grant of the patent:
**04.05.2016 Bulletin 2016/18**

(51) Int Cl.:
***B32B 27/00*** *(2006.01)*

(21) Application number: **10765746.2**

(22) Date of filing: **06.07.2010**

(86) International application number:
**PCT/EP2010/004065**

(87) International publication number:
**WO 2011/003564 (13.01.2011 Gazette 2011/02)**

(54) **HIGH BARRIER PACKAGING LAMINATE, METHOD FOR MANUFACTURING OF THE PACKAGING LAMINATE AND PACKAGING CONTAINER**

VERPACKUNGSLAMINAT MIT HOHER SPERREIGENSCHAFT, VERFAHREN ZUR HERSTELLUNG DES VERPACKUNGSLAMINATS UND VERPACKUNGSBEHÄLTER

MATÉRIAU D'EMBALLAGE STRATIFIÉ À PROPRIÉTÉS BARRIÈRE ÉLEVÉES, PROCÉDÉ DE FABRICATION DE CE MATÉRIAU D'EMBALLAGE STRATIFIÉ ET RÉCIPIENT D'EMBALLAGE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **08.07.2009 SE 0900948**

(43) Date of publication of application:
**16.05.2012 Bulletin 2012/20**

(73) Proprietor: **Tetra Laval Holdings & Finance S.A. 1009 Pully (CH)**

(72) Inventors:
• **TOFT, Nils**
  **S-224 72 Lund (SE)**
• **BENTMAR, Mats**
  **S-23337 Svedala (SE)**
• **BERLIN, Mikael**
  **S-224 56 Lund (SE)**

(74) Representative: **Tetra Pak - Patent Attorneys SE AB Tetra Pak
Patent Department
Ruben Rausings gata
22186 Lund (SE)**

(56) References cited:
**EP-A1- 1 920 919**

**Description**

TECHNICAL FIELD

The present invention relates to a non-foil, high-barrier, paper-based packaging laminate for packaging of liquid food or beverage, especially suitable for juice, the packaging laminate further comprising barrier layers and outermost and innermost heat sealable layers of thermoplastic polymers. The invention relates also to a method of manufacturing the packaging laminate and to a packaging container produced form the packaging laminate.

BACKGROUND OF THE INVENTION

Packaging containers of the single use disposable type for liquid foods are often produced from a packaging laminate based on paperboard or carton. One such commonly occurring packaging container is marketed under the trademark Tetra Brik Aseptic@ and is principally employed for aseptic packaging of liquid foods such as milk, fruit juices etc, sold for long term ambient storage. The packaging material in this known packaging container is typically a laminate comprising a bulk core layer of paper or paperboard and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional layer, most commonly an aluminium foil.

On the inside of the laminate, i.e. the side intended to face the filled food contents of a container produced from the laminate, there is an innermost layer, applied onto the aluminium foil, which innermost, inside layer may be composed of one or several part layers, comprising heat sealable adhesive polymers and/or polyolefins. Also on the outside of the core layer, there is an outermost heat sealable polymer layer.

The packaging containers are generally produced by means of modern, high-speed packaging machines of the type that form, fill and seal packages from a web or from prefabricated blanks of packaging material. Packaging containers may thus be produced by reforming a web of the laminated packaging material into a tube by both of the longitudinal edges of the web being united to each other in an overlap joint by welding together the inner- and outermost heat.sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally parallelepipedic, by fold formation along prepared crease lines in the packaging material.

The main advantage of this continuous tube-forming, filling and sealing packaging method concept is that the web may be sterilised continuously just before tube-forming, thus providing for the possibility of an aseptic packaging method, i.e. a method wherein the liquid content to be filled as well as the packaging material itself are reduced from bacteria and the filled packaging container is produced under clean circumstances such that the filled package may be stored for a long time even at ambient temperature, without the risk of growth of micro-organisms in the filled product. Another important advantage of the Tetra Brik® -type packaging method is, as stated above, the possibility of continuous high-speed packaging, which has considerable impact on cost efficiency.

A layer of an aluminium foil in the packaging laminate provides gas barrier properties quite superior to most polymeric gas barrier materials. The conventional aluminium-foil based packaging laminate for liquid food aseptic packaging is the most cost-efficient packaging material, at its level of performance, available on the market today. Any other material to compete must be more cost-efficient regarding raw materials, have comparable food preserving properties and have a comparably low complexity in the converting into a finished packaging laminate.

Hitherto, there are hardly any aseptic paper- or paperboard-based packages for long-term ambient storage of the above described kind available on the market, from a cost-efficient, non-foil packaging laminate, as compared to aluminium-foil laminates, that have a reliable level of barrier properties and food preservation properties for more than 3 months. There are some polymer materials that provide good barrier properties, but they either have the wrong mechanical properties in the laminate or are difficult to melt process at high speeds in the converting into thin layers in laminates, e.g. requiring expensive coextruded tie layers, or, they may, moreover, be considerably more expensive at feasible thickness than aluminium and are, therefore, not cost-efficient for packaging of e.g. milk or juice.

Among the efforts of developing more cost-efficient packaging materials and minimizing the amount of raw material needed for the manufacturing of packaging materials, there is a general incentive towards developing pre-manufactured films having multiple barrier functionalities, which may replace the aluminium-foil. Previously known such examples are films combining multiple layers, which each contribute with complementing barrier properties to the final film, such as for example films having a vapour deposited barrier layer and a further polymer-based barrier layer coated onto the same substrate film. Such films, which have been coated two times with different coating methods, tend, however, to become very expensive both in raw material and manufacturing costs, because in most cases an additional sealing layer will be needed, there will be very high demands on the qualities of the substrate film, such as thermomechanical stability and handling durability.

There is one type of polymer gas barrier layers that may be very cost-efficient, i.e. barrier polymers that are coated in the form of a dispersion or solution in a liquid or solvent, onto a substrate, and subsequently dried into thin barrier coatings. It is, however, very important that the dispersion or solution is homogeneous and stable, to result in an even coating with uniform barrier properties. Examples of suitable polymers for aqueous compositions are polyvinyl alcohols (PVOH), water-dispersible ethylene vinyl alcohols (EVOH) or polysaccharide-based water-dispersible or dissolvable polymers. Such dispersion coated or so called liquid film coated (LFC) layers may be made very thin, down to tenths of a gram per m$^2$, and may provide high quality, homogenous layers, provided that the dispersion or solution is homogeneous and stable, i.e. well prepared and mixed. It has been known for many years that e.g. PVOH has excellent oxygen barrier properties under dry conditions. PVOH also provides very good odour and flavour barrier properties, i.e. the capability to prevent odour substances from entering the packaging container from the surrounding environment, e.g. in a fridge or a storage room, and the capability to prevent flavour substances in the filled food product from migrating into the inner side of the packaging material, which capabilities becomes important at long-term storage of packages. Furthermore, such liquid film coated polymer layers from water-dispersible or -dissolvable polymers often provide good internal adhesion to adjacent layers, which contributes to good integrity of the final packaging container. With package integrity is generally meant the package durability, i.e. the resistance to leakage of a packaging container. Such water dispersible barrier polymers have a major draw-back, however, in that they are generally sensitive to moisture and that the oxygen gas barrier properties deteriorate rapidly at high relative moisture content in the packaging laminate. Consequently, a thin dispersion coated layer of PVOH or EVOH or a similar polymer, may be suitable for packaging of dry products in a dry environment, but much less for packaging of liquids and wet products or for storage under wet or humid conditions.

It has, moreover, been seen that the rather good oxygen barrier properties of a flat packaging laminate having a layer of dispersion coated barrier polymer (as compared to aluminium foil), were severely decreased during converting and transforming into packaging containers.

It has, therefore, previously been attempted to provide the moisture sensitive polymer layer with better initial oxygen barrier properties, as well as rendering it more moisture resistant, by modifying the polymer or including other substances in the polymer composition, i.a. by crosslinking the polymer. Such modifications and addition of substances, however, often make the process of liquid film coating more difficult to control and, importantly, more expensive. Such substances may also need careful screening in view of existing food safety legislations for food packaging. Alternatively, it has, been attempted to heat cure a dispersion coated PVOH layer in connection with the drying thereof, by heating it up to above 100 °C. However, such heat may damage the coated paperboard substrate and negatively influence the coating quality, for example by inducing defects, such as blisters and cracks in the oxygen barrier coating. Accordingly, there is still a need for a cost-efficient and robust, i.e. reliable also at moderate variations in manufacturing and handling conditions, non-aluminium foil packaging material for aseptic, liquid food packaging, e.g. of juice or other fruit-based beverage, which material provides sufficient barrier properties in packaging containers for long-term aseptic storage, under ambient conditions. The term long-term storage in connection with the present invention, means that the packaging container should be able to preserve the qualities of the packed food product, i.e. nutritional value, hygienic safety and taste, at ambient conditions for at least 6 months, preferably longer. The product to be packaged in packages made from the packaging laminate of the present invention are primarily fruit juices and nectars which are very sensitive to loss of vitamine C, and to loss or variations of substances providing the product with its characteristic aroma and taste.

DISCLOSURE OF THE INVENTION

It is, therefore, an object of the present invention to overcome or alleviate the above-described problems in producing a non-foil paper or paperboard packaging laminate for long-term, aseptic packaging of liquid or wet food.

It is a general object of the invention to provide a non-foil, paper or paperboard packaging laminate, having good gas barrier properties suitable for long-term, aseptic packaging and good internal adhesion between the layers, providing for good integrity of a packaging container manufactured from the laminate.

Especially, it is an object to provide a cost-efficient, non-foil, paper- or paperboard-based packaging laminate, providing for good gas barrier properties of a packaging container, good package integrity and good internal adhesion between the layers of the laminate.

EP-A-1920919 relates to a laminated packaging material, which can be applied to a packaging container for a fluid food such as juice or milk, comprising an outer layer made from thermoplastic resin, a base material layer, a gas barrier layer, and a sealant layer, wherein the gas barrier layer is made from a saponified ethylene-vinyl acetate random copolymer, the base material layer is usually a paperbased layer, and a layer adjoining at least an inner surface of the.gas barrier layer is made from a blend polymer having the sea island structure in which 92 to 98 weight % of linear low density polyethylene and 2 to 8 weight % of thermoplastic elastomer are blended, and the thermoplastic elastomer has the affinity with a hydroxyl group *and/or* a polarized group in the saponified ethylene-vinyl acetate random copolymer in the gas barrier layer. The laminated packaging material has a higher seal strength, when converted into filled and sealed packaging containers form the laminated material.

It is a further object of the invention to provide a, relatively to aluminium foil, cost-efficient, non-foil paper or paperboard packaging laminate having good gas barrier properties, good water vapour barrier properties and good internal adhesion properties for the purpose of manufacturing aseptic, gas-tight and water-vapour tight packaging containers, having good package integrity.

Yet a further object of the invention is to provide a cost-efficient and robust, non-foil, paper- or paperboard-based and heat-sealable packaging laminate having good gas barrier properties, good water vapour barrier properties and good internal adhesion properties for the purpose of manufacturing aseptic packaging containers for long-term storage of liquid foods at maintained nutritional quality under ambient conditions.

A more specific object, according to at least some of the embodiments of the invention, is to provide a cost-efficient, non-foil, paper- or paperboard-based liquid packaging container having good gas and water vapour barrier properties, good odour and flavour barrier properties, and good integrity for aseptic packaging of fruit juice, at long-term storage under ambient conditions.

These objects are thus attained according to the present invention by the laminated packaging material, the packaging container and the method of manufacturing the packaging material, as defined in the appended claims.

According to a first aspect of the invention, the general objects are attained by a non-foil packaging laminate for packaging of liquid food or beverage, the packaging laminate comprising a first layer of paper, which first paper layer is situated towards the inner side of the laminated packaging material and a second layer of paper situated towards the outer side of the laminated packaging material, said first and second paper layers being laminated to each other by means of an intermediate bonding layer in a sandwich structure, the packaging laminate further comprising a gas barrier coating layer, coated onto the inner side of the first paper layer by liquid film coating of a liquid gas barrier composition onto said first paper layer and subsequent drying, the liquid composition containing a polymer binder dispersed or dissolved in an aqueous or solvent medium, and a further barrier layer towards water vapour, laminated and bonded to the barrier-coated inside of the first paper layer by means of a second intermediate polymer bonding layer, the packaging laminate further comprising an innermost layer of liquid tight, heat sealable thermoplastic polymer material applied on the inner side of the further barrier layer, and an outermost layer of liquid tight, heat sealable thermoplastic polymer material on the opposite side of the packaging laminate, applied on the outer side of the second, core paper layer.

It was, thus, expected that in order to reach the required level of oxygen barrier properties in a final packaging container for aseptic, long-term storage, the liquid film coatable gas barrier polymer binder, e.g. PVOH, would have to be improved by new means or by some of the known modification methods, i.e. the addition of a crosslinking substance or by heat curing. Still, it would be uncertain if the improvement in oxygen barrier would be strong enough for aseptic packaging and long-term, ambient storage.

A packaging laminate for use in packaging containers for aseptic, long-term storage, needs also improved water vapour barrier properties.

With water vapour barrier properties is meant a barrier against slowly migrating water vapour through the material, i.e. not the immediate liquid barrier properties. As an example, heat sealable polyolefins, such as the preferred low density polyethylenes (LDPE's or LLDPE's), are liquid barriers and are suitable as outermost layers to protect the paperboard inside of a laminate against the filled liquid product or against wet conditions outside the package, such as at high humidity or chilled storage. Low density polyethylene has, however, comparably low water vapour barrier properties, i.e. actually no capability at reasonable thickness, to withstand the long-term, slow migration of water vapour through the laminate during shipping and storage. Water vapour barrier properties are important during long-term storage, also because they prevent moisture from a packaged liquid food product from escaping out of a packaging container, which could result in a lower content of liquid food product than expected in each packaging container, when finally opened by the consumer. Possibly also the composition and the taste of the product could be altered by becoming more concentrated. Moreover, by preventing water vapour from migrating and escaping out of the packaging container into the paper or paperboard layer, the packaging laminate will be able to keep its stiffness properties for a longer time. Thus, it is important that the packaging material also has sufficient water vapour barrier properties to be suitable for long-term aseptic packaging of liquid products.

Thin aluminium metallised layers, i.e. vapour deposited layers of aluminium metal, are known to provide water vapour barriers. However, when manufacturing cost efficient, paper-based packaging laminates comprising such barrier layers alone, it has been seen that the oxygen barrier properties are not sufficient.

The conventional aluminium foil used today in commercial packaging containers for aseptic, liquid food, has both water vapour barrier properties and oxygen barrier properties. There are hardly any suitable, cost-efficient material alternatives providing both reliable oxygen barrier and water vapour barrier comparable to aluminium foil.

Very surprisingly, however, when producing packaging containers by laminating two such separated and different barrier materials to each other, i.e. one having a liquid film coated PVOH barrier layer, and another having a vapour deposited barrier layer, it was found that not only sufficient water vapour barrier properties were achieved, but also that the oxygen barrier properties, of the finished packaging laminate and, in particular, of the final package were surprisingly improved and suddenly well above sufficient. The contribution of the vapour deposited compound layer to the oxygen barrier properties of the finished packaging laminate should have been insufficient, but was much higher than expected and calculated, from the values of oxygen transmission measured on each of the barrier layers separately.

Moreover, after converting and forming into a packaging container, synergetic, further surprisingly improved barrier properties were obtained. Although the contribution from the inclusion of e.g. a metallised layer to the total oxygen barrier of the finished packaging laminate was surprising, the oxygen barrier properties in the final package were even further improved, compared to a packaging container from a corresponding laminate without the vapour deposited film.

It was later also found that defects in the dispersion coated layer, resulting in impaired oxygen barrier properties of flat samples of the packaging laminate with the dispersion coated layer, are "repaired" or "healed" by the thin layer of vapour deposited compound in an unexpected manner.

This repairing or healing effect has for example been seen when coating different paper qualities for packaging laminates similar to the invention. Some paperboard grades seem less suitable for liquid film coating of an oxygen barrier layer in that the oxygen gas barrier measured on flat packaging laminate may vary a lot between different grades. However, the differences are evened out by the additional thin vapour deposited barrier layer on the inside of the liquid film coated layer. It seems that defects like pinholes or micro-cracks likely are created in the thin liquid film coated layer when coating low quality paper or paperboard, and that when laminating to a thin vapour deposited layer having some barrier properties, these defects are healed and do not much affect the properties of the final package.

According to a second well-functioning embodiment, the water vapour barrier layer is a layer comprising a polyolefin-based matrix polymer with inorganic filler particles distributed within the matrix polymer.

The slow migration of water vapour molecules through the layer may be reduced considerably by compounding mineral fillers into melt processable thermoplastic polymer layers, e.g. of normally water resistant polyolefin-based polymers,. However, conventional mineral fillers, such as for example talcum or calcium carbonate, do not provide any significant oxygen barrier properties to such a layer.

When trying to protect a thin, liquid film coated barrier layer of e.g. PVOH, by laminating with a layer of melt extruded polyolefin having inorganic particles homogeneously distributed therein, it was seen that sufficient levels of oxygen barrier could not be maintained during long term storage conditions at reasonable layer thicknesses, although the PVOH layer initially provides quite good oxygen barrier properties to a laminate. Accordingly, it was concluded that neither oxygen barrier properties nor water vapour barrier properties were sufficient and that further layers and materials would be necessary in the laminate structure, which in turn would lead to a more expensive laminate than would be feasible to compete with corresponding aluminium-foil based packaging laminates.

Very surprisingly, however, when producing packaging containers by laminating a layer obtained from a liquid film coated PVOH barrier composition also containing inorganic particles, with a further water vapour barrier layer, it was found that not only sufficiently high oxygen barrier properties were achieved, but also that the water vapour barrier properties of the finished packaging laminate and, even, of the final package were surprisingly improved and well above sufficient. In fact, synergetic and surprisingly improved water vapour barrier properties were obtained by including fillers also in the oxygen barrier layer. Although some contribution from the inclusion of a filled polyolefin layer alone to the total water vapour barrier of a finished packaging laminate was obtained, sufficient and reliable water vapour barrier properties were not obtained until also, surprisingly, the PVOH layer comprised inorganic particles. Then, quite unexpectedly, the water vapour barrier was further improved by 40 % over what was obtained from the filled polyolefin layer alone. The same kind of results are obtained regarding a thin vapour deposition water vapour barrier layer.

On the other hand, the contribution of the filled polyolefin layer to the overall oxygen barrier properties of the finished packaging laminate should have been zero, but the total long term oxygen transmission of the laminate was also unexpectedly improved compared to the completely insufficient values of oxygen transmission obtained and measured on the corresponding material when not comprising inorganic particles in the liquid film coated, oxygen barrier layer.

Such an unexpected, synergetic effect is needed to be able to rely on such packaging laminates also under extreme conditions, such as in very dry climate, because the moisture migration through the packaging container wall from the 100 % wet inside packaged product towards the outside of the packaging container wall, will be higher when there is dry climate on the outside of the package. Due to the bigger difference in relative humidity (RH), the driving forces for moisture transport through the material of the packaging container wall will be much higher, why the water vapour barrier synergy effect will in fact be reinforced and the total water vapour barrier become much better, due to the fact that the oxygen barrier layer can be kept more dry by the outside dry climate. The water vapour barrier contribution from the oxygen barrier layer will thus be increased.

Suitably, the polymer binder of the liquid gas barrier composition is selected from the group consisting of vinyl alcohol-based polymers, such as PVOH or water dispersible EVOH, acrylic acid or methacrylic acid based polymers, such as poly (meth)acrylic acid (PAA, PMAA), polysaccharides, such as for example starch or starch derivatives, chitosan or other cellulose derivatives, water dispersible polyvinylidenechloride (PVDC) or water dispersible polyesters, water dispersible polyamide and combinations of two or more thereof.

In cases where the dispersible or dissolvable polymer binder used for the present invention is a polymer having gas barrier properties by itself, naturally it will be possible to reach higher total gas barrier properties in the packaging laminate. Accordingly, the gas barrier coating layer is preferably formed from a composition mainly comprising a polymer selected from the group consisting of (PVOH), water dispersible (EVOH), (PVDC), water dispersible polyamide (PA), starch, starch derivatives, and combinations of two or more thereof.

Where it is desirable to use a polymer that has a more cost-efficient and positive environmental profile, the gas barrier coating layer is formed from a composition mainly comprising PVOH, water dispersible EVOH or starch. A water dispersible EVOH has a higher amount of vinyl alcohol units compared to melt processable EVOH, and are more similar in nature to PVOH than to EVOH. Pure PVOH and starch-based polymers may be more or less biologically degradable, why such polymers may be more desirable for some packaging applications.

In comparison with aluminium foil, PVOH as a liquid film coating barrier polymer enjoys many desirable properties, with the result that it is the most preferred barrier material in many contexts. Among these, mention might be made of the good film formation properties, compatibility with foods and economic value, together with its high oxygen gas barrier properties. In particular, PVOH provides a packaging laminate with high odour and flavour barrier properties, which is especially important for the packaging of milk and juice respectively, but also for other products to be stored in the package for a long time.

Like many other conceivable barrier polymers such as, for example, starch or starch derivatives, polyvinyl alcohol is suitably applied by means of a liquid film coating process, i.e. in the form of an aqueous or solvent-based dispersion or solution which, on application, is spread out to a thin, uniform layer on the substrate and thereafter dried. We have found that one drawback in this process is, however, that the liquid polymer dispersion or polymer solution which is applied on a layer of paper or paperboard may penetrate into the liquid-absorbing fibres of the core layer. There is a risk of pinholes being formed, depending on paperboard characteristics, if the applied layer is too thin, in connection with the removal of water or solvent for drying the applied barrier layer.

Aqueous systems generally have certain environmental advantages. Preferably, the liquid gas barrier composition is water-based, because such composition usually have a better work environment friendliness than solvent-based systems, as .well.

As briefly mentioned above, it is known to include a polymer or compound with functional carboxylic acid groups, in order to improve the water vapour and oxygen barrier properties of a PVOH coating. Suitably, the polymer with functional carboxylic acid groups is selected from among ethylene acrylic acid copolymer (EAA) and ethylene methacrylic acid copolymers (EMAA) or mixtures thereof. One known such particularly preferred barrier layer mixture consists of PVOH, EAA and an inorganic laminar compound. The EAA copolymer is then included in the barrier layer in an amount of about 1-20 weight %, based on dry coating weight.

It is believed that the improved oxygen and water barrier properties result from an esterification reaction between the PVOH and the EAA at an increased drying temperature, whereby the PVOH is crosslinked by hydrophobic EAA polymer chains, which thereby are built into the structure of the PVOH. Such a mixture is, however, considerably more expensive because of the cost of the additives. Furthermore, drying and curing at elevated temperatures is not preferred because the risk of crack and blisters formation in a barrier coating onto a paperboard substrate. Crosslinking can also be induced by the presence of polyvalent compounds, e.g. metal compounds such as metal-oxides. However, such improved liquid film coated gas barrier layers still are not able to by itself provide a cost-efficient and well-formed packaging container with sufficient oxygen barrier properties for reliable, long-term aseptic packaging at ambient storage.

Special kinds of water-dispersible ethylene vinyl alcohol polymer (EVOH) have lately been developed and may be conceivable for an oxygen barrier liquid coating composition, according to the invention. Conventional EVOH polymers, however, are normally intended for extrusion and are not possible to disperse/dissolve in an aqueous medium in order to produce a thin liquid film coated barrier film of 5 g/m2 or below, preferably 3,5 g/m2 or below. It is believed that the EVOH should comprise a rather high amount of vinyl alcohol monomer units to be water-dispersible or dissolvable and that the properties should be as close to those of liquid film coating grades of PVOH as possible. An extruded EVOH layer is not an alternative to liquid film coated EVOH, because it inherently has less similar properties to PVOH than EVOH grades for extrusion coating, and because it cannot be applied at a cost-efficient amount below 5 g/m2 as a single layer by extrusion coating or extrusion lamination, i.e. it requires co-extruded tie layers, which are generally very expensive polymers. Furthermore, very thin extruded layers cool off too quickly and do not contain enough heat energy to sustain sufficient lamination bonding to the adjacent layers.

Other examples of polymer binders providing oxygen barrier properties, suitable for liquid film coating, are the polysaccharides, in particular starch or starch derivatives, such as preferably oxidised starch, cationic starch and hydroxpropylated starch. Examples of such modified starches are hypochlorite oxidised potato starch (Raisamyl 306 from Raisio), hydroxypropylated corn starch (Cerestar 05773) etc. However, also other starch forms and derivatives are known to provide gas barrier properties at some level.

Further examples of polymer binders are gas barrier coatings comprising mixtures of carboxylic acid containing polymers, such as acrylic acid or methacrylic acid polymers, and polyalcoholic polymers, such as PVOH or starch, which are described for example in EP-A- 608808, EP-A-1086981 and WO02005/037535,. A cross-linking reaction of these polymer binders are preferred, as mentioned above, for resistance to high humidity.

Also mixtures with only a minor mixing ratio of one of the components and even compositions from the sole of these components do provide oxygen barrier properties in an aqueous coating composition.

Most preferably, however, the gas barrier polymer is PVOH, because it has all the good properties mentioned above, i.e. film formation properties, gas barrier properties, cost efficiency, food compatibility, odour and flavour barrier properties.

A PVOH-based gas barrier composition performs best when the PVOH has a degree of saponification of at least 98 %, preferably at least 99 %, although also PVOH with lower degrees of saponification will provide oxygen barrier properties.

According to a preferred embodiment, the liquid composition additionally comprises inorganic particles in order to further improve the oxygen gas barrier properties.

The polymer binder material may for example preferably be mixed with an inorganic compound which is laminar in shape, or flake-formed. By the layered arrangement of the flake-shaped inorganic particles, an oxygen gas molecule has to migrate a longer way, via a tortuous path, through the oxygen barrier layer, than the normal straight path across a barrier layer.

When employing inorganic laminar particles, it may alternatively be possible to use a polymer binder having very low or insignificant oxygen barrier properties. Examples of such other non-barrier binders are other high hydrogen-bonding polymers having a high amount of hydrogen-bonding groups like hydroxyl groups, amino groups, carboxyl groups, sulfonic acid groups, carboxylate groups, sulfonate ion groups, ammonium groups and the like. Specific examples of such non-barrier polymer binders are i.a. cellulose derivatives such as hydroxymethyl (or ethyl) cellulose, amylopectin, and other polysaccharide derivatives, polyethyleneimine, polyallylamine e.t.c.

Preferably, the inorganic laminar compound is a so-called nanoparticle compound dispersed to an exfoliated state, i.e. the lamellae of the layered inorganic compound are separated from each other by means of a liquid medium. Thus the layered compound preferably may be swollen or cloven by the polymer dispersion or solution, which at dispersion has penetrated the layered structure of the inorganic material. It may also be swollen by a solvent before added to the polymer solution or polymer dispersion. Thus, the inorganic laminar compound is dispersed to a delaminated state in the liquid gas barrier composition and in the dried barrier layer. The term clay minerals includes minerals of the kaolinite, antigorite, smectite, vermiculite, bentonite or mica type, respectively. Specifically, laponite, kaolinite, dickite, nacrite, halloysite, antigorite, chrysotile, pyrophyllite, montmorillonite, hectorite, saponite, sauconite, sodium tetrasilicic mica, sodium taeniolite, commonmica, margarite, vermiculite, phlogopite, xanthophyllite and the like may be mentioned as suitable clay minerals. Especially preferred nanoparticles are those of montmorillonite, most preferred purified montmorillonite or sodium-exchanged montmorillonite (Na-MMT). The nano-sized inorganic laminar compound or clay mineral preferably has an aspect ratio of 50-5000 and a particle size of up to about 5 $\mu$m in the exfoliated state.

Preferably, the inorganic particles mainly consist of such laminar bentonite particles having an aspect ratio of from 50 to 5000.

Preferably, the gas barrier layer includes from about 10 to about 40 weight %, more preferably from about 20 to about 40 weight % and most preferably from about 25 to about 35 weight %, of such inorganic laminar compounds based on dry coating weight. If the amount is too low, there will not be obtained the synergistic barrier effects. If the amount is too high, the liquid composition will become more difficult to apply as a coating and more difficult to handle in storage tanks and conduits of the applicator system. Preferably, the barrier layer includes from about 99 to about 60 weight %, more preferably from about 99 to about 70 weight % and most preferably from about 95 to about 80 weight % of the polymer based on the dry coating weight. An additive, such as a dispersion stabiliser or the like, may be included in the gas barrier composition, preferably in an amount of not more than about 1 weight % based on the dry coating.

According to another embodiment, the inorganic particles mainly consist of laminar talcum particles having an aspect ratio of from 10 to 500. Such a gas barrier composition comprises an amount of from 10 to 60 weight-%, more preferably from 20 to 50 weight-%, most preferably from 30-50 weight-% of the talcum particles, based on dry weight. Below 20 weight-%, there is hardly any significant increase in gas barrier properties, while above 50 weight-%, the coated layer may be less flexible and coherent. The polymer binder then seems to be in too low amount to surround and disperse the particles and laminate them to each other within the layer.

It is also known from WO03/031720 hereby incorporated by reference, that surprisingly good oxygen barrier properties may be achieved when there is made use of colloidal silica particles, exhibiting a particle size of 3-150 nm, preferably 4-100 nm and even more preferred 5-70 nm, which particles are preferably amorphous and spherical. The use of colloidal silica particles moreover has the advantage that the liquid barrier composition may be applied at a dry content of 15-40 weight %, preferably 20-35 weight % and even more preferred 24-31 weight %, whereby the demand on forcible drying is decreased.

Alternatives of inorganic particles according to the invention are particles of kaolin, mica, calcium carbonate etc.

The preferred polymer binder, also when employing inorganic particles for providing oxygen barrier properties, is PVOH, partly due to its advantageous properties mentioned above. In addition, PVOH is advantageous from a mixing point of view, i.e. it is generally easy to disperse or exfoliate inorganic particles in an aqueous solution of PVOH to form a stable mixture of PVOH and particles, thus enabling a good coated film with a homogeneous composition and morphology.

In one embodiment of the invention, when the water vapour barrier layer is a thin vapour deposited layer, preferably a metallised layer, the oxygen gas barrier layer is applied onto the inner side of the first paper layer, at a total amount of from 2 to 5 $g/m^2$, preferably from 2 to 4 $g/m^2$, more preferably from 2,5 to 3,5 $g/m^2$, dry weight. Below 2 $g/m^2$, there will be too low gas barrier properties achieved, while above 5 $g/m^2$, the coated layer will be less cost-efficient, due to high cost of barrier polymers in general and due to high energy cost for evaporating off the liquid. A recognisable level of oxygen barrier is indeed achieved by PVOH at 0,5 $g/m^2$ and above, but a good balance between barrier properties and costs is achieved between 2 and 5 $g/m^2$.

For optimised barrier properties in relation to cost-efficiency, the oxygen gas barrier layer is applied in two consecutive steps with intermediate drying, as two part-layers. When applied as two part-layers, each layer is suitably applied in amounts from 1 to 2,5 $g/m^2$, preferably from 1 to 2 $g/m^2$, and allows a higher quality total layer from a lower amount of liquid gas barrier composition. More preferably, the two part-layers are applied at an amount of from 1,5 to 2 $g/m^2$ each..

Furthermore, the coated layer may become too brittle at a higher thickness than 6 g/m2.

For the sake of cost-efficiency of the liquid film coating operation, and of raw materials, the first, inner paper layer has a surface weight of from 20 to 100 g/ m2, preferably from 20 to 70 g/m2, more preferably from 20-50 g/m2.

In order to provide a dimensionally stable packaging container, the first paper layer is laminated to a second paper layer, which second paper layer is a core paperboard layer providing the final package with fold-forming dimensional stability by means of its significantly higher stiffness properties. A common such example are the brick-shaped liquid packaging containers.

A paperboard core layer for use in the invention as the second paper layer, usually has a thickness of from about 100 $\mu$m up to about 600 $\mu$m, and a surface weight of approximately 100-500 g/m2, preferably about 200-300 g/m2, and may be a conventional paper or paperboard of suitable packaging quality.

For low-cost aseptic, long-term packaging of liquid food, a thinner packaging laminate may be used, having a thinner paper layers. The packaging containers made from such packaging laminates are not fold-formed and more similar to pillow-shaped flexible pouches. A suitable second paper layer for such pouch-packages usually has a surface weight of from about 20 to about 140 g/m2, preferably from about 20 to about 120 g/m2, more preferably from about 20 to about 70 g/m2, more preferably from about 20 to about 50 g/m2.

The two paper layers are preferably bonded to each other by means of an extrusion laminated thermoplastic polymer layer, in order to provide a paper sandwich construction having increased stiffness, thanks to the inherent stiffness properties of the paper layers in interaction with the intermediate polymer spacer layer or distancing layer. Well-functioning examples of such a thermoplastic polymer are LDPE and other grades based on low density polyethylenes. LDPE is preferred for best possible cost-efficiency in connection with a sandwich stiffening effect.

It is preferred according to the invention that the oxygen gas barrier layer is coated directly onto, and preferably adjacent, contiguous to, the second layer of paper or paperboard. The paper layer ensures that moisture that migrates outwards through the laminated packaging material and is not trapped in the moisture sensitive liquid film coated oxygen gas barrier layer, but further transported via the paper layer towards the outside of the packaging container. The paper layer breathes away the humidity from the adjacent barrier layer and keeps the moisture content within the barrier layer at an almost constant low level for a longer time.

In order to fulfil requirements on higher gas barrier properties, an additional gas barrier coating layer may be coated onto the outer side of the first paper layer.

Alternatively, or in addition, a gas barrier coating layer may be coated also onto the inner side of the second paper layer.

Suitable thermoplastics for the outermost and innermost heat sealable liquid-tight layers are polyolefins, preferably polyethylenes and most preferably low density polyethylenes such as, for example LDPE, linear LDPE (LLDPE) or single site catalyst metallocene polyethylenes (m-LLDPE) or co-polymers or blends thereof. The thickness of the innermost heat sealbale polyolefin layer is suitably from 10 to 30 um, preferably from 10 to 20 um, more preferably from 12 to 15 $\mu$m.

The innermost heat sealable polyolefin layer may be bonded to the barrier coated paper by means of an intermediate tie layer or bonding layer of a polymer adhesive such as a modified polyolefin, preferably a modified polyethylene. Such a tie layer or adhesive polymer layer may be very thin, from 3-6 g/m2 and may help to keep the good adhesion between the filled polyolefin water vapour barrier layer and the innermost layer, or in particular between the vapour deposited barrier layer and the innermost heat sealable layers.

Examples of such modified adhesive polyolefins, suitable for the tie layer, are based on LDPE or LLDPE co

-polymers or, preferably, graft co-polymers with functional-group containing monomer units, such as carboxylic or glycidyl functional groups, e.g. (meth)acrylic acid monomers or maleic anhydride (MAH) monomers, (i.e. ethylene acrylic acid copolymer (EAA) or ethylene methacrylic acid copolymer (EMAA)), ethylene-glycidyl(meth)acrylate copolymer (EG(M)A) or MAH-grafted polyethylene (MAH-g-PE). Another example of such modified polymers or adhesive polymers are so called ionomers or ionomer polymers. Preferably, the modified polyolefin is an ethylene acrylic acid copolymer (EAA) or an ethylene methacrylic acid copolymer (EMAA).

Suitable barrier layers towards water vapour, to be laminated and bonded to the inside of the gas-barrier coated first paper layer, are thus for example vapour deposition coatings and filled polyolefin layers.

A vapour deposited barrier layer is applied by means of physical vapour deposition (PVD) or chemical vapour deposition (CVD) onto a polymer substrate film.

The thin vapour deposited layers according to the invention are nanometer-thick, i.e. they have a thickness that is most suitably counted in nanometers, for example of from 5 to 500 nm (50 to 5000 A), preferably from 5 to 200 nm, more preferably from 5 to 100 nm and most preferably from 5 to 50 nm.

Generally, below 5 nm the barrier properties may be too low to be useful and above 200 nm, the coating is less flexible and, thus, more prone to cracking when applied onto a flexible substrate.

Commonly, such a vapour deposition coating having barrier properties is made of a metal compound or an inorganic metal compound. There are also organic vapour deposited barrier coatings, such as carbon-based vapour deposition coatings, e.g. amorphous carbon layers or so-called diamond-like carbon coatings, which may be advantageous for packaging laminates and packaging containers according to the invention.

Preferably, the thin vapour deposited layer substantially consists of aluminium metal. Such a metallic thin vapour deposited layer preferably has a thickness of from 5 to 50 nm, more preferably from 5-30 nm, which corresponds to less than 1 % of the aluminium metal material present in an aluminium foil of conventional thickness, i.e. 6,3 $\mu$m.

In some cases, a step of surface treatment of the substrate film may be carried out before vapour deposition coating, especially metallising, the substrate film, in order to secure sufficient adhesion of the coating to the substrate film.

Preferably, the metallised layer has an optical density (OD) of from 1.8 to 3.0, preferably from 2.0 to 2.7. At an optical density lower than 1.8, the barrier properties of the metallised film may be too low. At above 3.0, on the other hand, the metallisation layer becomes brittle, and the thermostability during the metallisation process will be too low due to higher heat load when metallising the substrate film during a longer time. The coating quality and adhesion will then be clearly negatively affected. An optimum has, thus, been found between these values, preferably between 2.0 and 2.7.

A further preferable coating is a coating of aluminium oxide having the formula AlOx wherein x varies from 1.0 to 1.5, preferably of $Al_2O_3$. Preferably, the thickness of such a coating is from 5 to 300 nm, more preferably from 5 to 100 nm and most preferably from 5 to 50 nm.

Normally, an aluminium metallised layer inherently has a thin surface portion consisting of an aluminium oxide due to the nature of the metallisation coating-process used.

A thin coating metallisation layer, or a layer of an inorganic metal compound, is preferably applied by means of vacuum vapour deposition, but may less preferably be applied also by other methods generally known in the art having a lower productivity, such as electroplating or sputtering. The most preferred metal according to the present invention is aluminium, although any other metal capable of being vacuum deposited, electroplated or sputtered may be used according to the invention. Thus, less preferred and less common metals such as Au, Ag, Cr, Zn, Ti or Cu are conceivable also. Generally, thin coatings of metal or a mixture of metal and metal oxide provide barrier properties against water vapour and are used when the desired function is to prevent water vapour from migrating into and through the multilayer film or packaging laminate. Most preferably, the metal in a metallisation or inorganic metal coating is aluminium (Al). Further examples of aluminium inorganic compounds are aluminium oxide, nitride and aluminium carbide, or a mixture of these .

Although aluminium metal or aluminium oxide layers or mixtures thereof are preferred according to the invention, also other vapour deposited inorganic metal compound layers may be suitable for carrying out the invention. Also similar compounds from half-metals such as silicon may be suitable for the invention and are included by the term inorganic metal compounds, as long as they are cost-efficient and have at least some low level of oxygen barrier properties.,

Some of these inorganic coatings may be applied by means of plasma enhanced chemical vapour deposition method (PECVD), wherein metal or metal compound vapour is deposited onto the substrate under more or less oxidising circumstances. Silicon oxide coatings may, for example, be applied by a PECVD process.

According to another preferred embodiment, according to the invention, the vapour deposition coating may be a thin carbon-based barrier layer. Such carbon-based layers may be coated by means of a plasma coating process, resulting in a hydrocarbon polymer coating, referred to as amorphous carbon or diamond-like carbon (DLC) coatings.

The substrate polymer film may comprise any polymer film from any polymer suitable for vapour deposition coating and of any thickness as long as it will provide for a packaging container having good barrier properties and integrity properties in handling and distribution. The choice of substrate film however affects the costs of resulting packaging material and packaging containers to large extent, why polyethylene-based substrate films are preferred.

However, also films including for example polyethyleneterephthalate (PET), polyamide (PA) or other thermoplastic polymers are feasible within the scope of the invention, depending on pricing. Such commercially available films are often bi-axially oriented. Such films constitute a more expensive alternative, also due to the fact that they are not heat sealable in themselves, but need an additional heat sealing layer applied to one side, commonly applied by means of extrusion coating when laminating into a packaging laminate. The substrate film may be oriented or non-oriented depending on the choice of polymer and may be produced by means of extrusion blowing film manufacturing methods or by means of extrusion casting film manufacturing methods.

According to a preferred embodiment of the invention, the vapour deposition coated barrier layer is applied onto a substrate polymer film including said innermost heat sealable polymer layer.

Preferably, the substrate polymer film is polyolefin-based. Preferably, the innermost heat sealable polymer layer is mainly consisting of a low density polyethylene, preferably linear low density polyethylene (LLDPE).

According to one embodiment, the substrate polymer film is a mono-oriented film comprising said innermost heat sealable polymer. By mono-orienting the film, increased Young's modulus as well as decreased elongation at break is obtained in the film. This will make it possible to vapour deposition coat even a very thin film and to handle it in a lamination process. Moreover, such a film may also contribute to stiffness in the final laminated material, despite being very thin.

Even more preferably, the mono-oriented film comprises in the majority various types of low density polyethylenes, preferably linear low density polyethylene (LLDPE).

Preferably, the film has a thickness of 20 $\mu$m or below, more preferably 15 $\mu$m or below.

A step of mono-axially orientating the polymer substrate film is carried out by means of a combined orientating and relaxation method involving at least 10 orientation roller nips, of which the first and the last nips include driven rollers and the rollers there between are non-driven, idle rollers. By this method, stretching and relaxation takes place during the process where the tensions within the film allow and require it, without breaking the web, by help of the idle running stretching rollers. By this method, the speed of the orientation process may also be increased to further increase cost-efficiency of the mono-oriented film substrate.

Preferably, the polymer substrate film may be oriented to a ratio of 2-7, preferably from 2-4, more preferably from 2-3 and, preferably, the polymer substrate film then gets an elongation at break lower than 400 %, preferably lower than 300 %, more preferably lower than 200 %.

Thus, Young's modulus may vary from about 250-300MPa at an orientation ratio of 2, to up to 700-800 MPa for an orientation ratio of about 6-7.

Generally, Young's Modulus increases with the orientation ratio, while the elongation at break decreases with the orientation ratio. A good film has been developed at an orientation ratio of about 3, resulting in a film which provides for good elasticity, strength and integrity in a packaging container manufactured from a packaging laminate comprising the film at its innermost side. Using other types and grades of low density polyethylenes, higher orientation ratios may alternatively be preferred.

According to a further embodiment, the film comprises a skin layer for receiving the metal of a modified polyolefin, or so called adhesive polymer, onto which skin layer the vapour deposition coated barrier layer of a metal compound, inorganic metal compound or carbon-based compound is vapour deposited.

Examples of such modified polyolefins are based on LDPE or LLDPE co-polymers or, preferably, graft co-polymers with functional-group containing monomer units, such as carboxylic or glycidyl functional groups, e.g. (meth)acrylic acid monomers or maleic anhydride (MAH) monomers, (i.e. ethylene acrylic acid copolymer (EAA) or ethylene methacrylic acid copolymer (EMAA)), ethylene-glycidyl(meth)acrylate copolymer (EG(M)A) or MAH-grafted polyethylene (MAH-g-PE). Another example of such modified polymers or adhesive polymers are so called ionomers or ionomer polymers. Preferably, the modified polyolefin is an ethylene acrylic acid copolymer (EAA) or an ethylene methacrylic acid copolymer (EMAA).

However, also other skin layers are conceivable for receiving a vapour deposition coating and provide good adhesion between the coating and the film.

Suitable polyolefin-based matrix polymers for the water vapour barrier layer according to the invention are those based on, comprising or preferably consisting of high density polyethylene (HDPE). Optimal water vapour barrier properties in combination with other required package properties are obtained when using a matrix composition consisting of HDPE and inorganic filler particles dispersed homogeneously within the matrix polymer. However, also other polyolefins such as polyethylene (LDPE, MDPE) and polypropylene (PP), and copolymers or blends thereof, are feasible matrix polymers within the scope of the invention. It is, however, preferred according to the invention that the matrix polymer mainly comprises HDPE or is based on HDPE. Most preferably, the matrix polymer consists of HDPE.

The inorganic filler used according to the invention is preferably laminar in shape and configuration, in order to provide the best possible water vapour barrier properties. Examples of such laminar filler particles are talcum, mica and nano-sized clay particles, e.g. montmorillonite, smectite, bentonite etc. Most preferred are laminar talcum particles. However, also other inorganic filler particles, such as kaolin, calcium carbonate, dolomite and others, may work sufficiently well when used in high amounts (preferably more than 50 weight-%).

The water vapour barrier layer advantageously has a thickness of from 15 to 50 $\mu$m, preferably from 15 to 30 $\mu$m, most preferably from 15 to 25$\mu$m.

According to an alternative embodiment of the invention, the water vapour barrier layer, comprising a polyolefin-based matrix polymer and inorganic filler particles, is co-extruded by means of micro-multilayer co-extrusion technology, with a tougher or more shock absorbing polymer, relative to the filled polyolefin, such that the water vapour barrier layer consists of several thin alternating layers of filled polyolefin and tough or shock absorbing polymer. In this way, both water vapour barrier properties of the filled polyolefin layers are kept, while the shock absorbing alternating layers also provide some toughness to the co-extruded film. The inherent brittleness of the filled polyolefin layers is thus compensated with the shock absorbing properties provided by the alternating layers of shock absorbing polymers. Such tougher polymers may be found among the LLDPE polymers and shock absorbing polymers are selected from a group consisting of m-LLDPE (metallocene-catalyst polymerised Linear Low Density Polyethylene), VLDPE (Very Low Density Polyethylene), ULDPE (Ultra Low Density Polyethylene) and melt extrudable grades of elastomers, plastomers and TPE (Thermoplastic Elastomers).

In micro-multilayer co-extrusion technology, a so-called multiplier feed-block is utilised, which divides the flows of the two different polymers into multiple micrometer -thin, alternating layers, thus forming a film of thin alternating polymer layers. In doing so, a film comprising two different polymers may be tailor-made and optimised regarding layer thicknesses and the desired properties. Suitably, the micro-multilayer co-extruded water vapour barrier film has a thickness of from 10 to 23 $\mu$m.

In order to increase the light barrier of such a packaging laminate, if needed, black, light-absorbing pigments may be blended into one of the polymers, while white, light-reflecting pigments are blended into the other polymers of the micro-multilayer co-extruded layers. The pre-manufactured micro-multilayer film obtains thus a greyish appearance.

Preferably, water vapour barrier layer is bonded to the first,inner paper layer by a second intermediate polymer layer, preferably a thermoplastic polymer layer and more preferably selected from polyolefins and polyolefin-based co-polymers, often known as adhesive polymers, especially LDPE or polyethylene-based polymers or co-polymers, or adhesive polymers. The thickness of the intermediate thermoplastic bonding layer may for example be from 10 to 20 um, more preferred from 12-to 15 um.

In order to further improve the light barrier of a packaging laminate according to the invention, light absorbing particles or pigments may be blended into the second and/ or first intermediate thermoplastic bonding layer. One example of such light absorbing particles is carbon black. The black colour of the intermediate bonding layer is then advantageously hidden towards the outside by the paper layer(s), and towards the inner side of the laminate, by the water vapour barrier layer, e.g. a metallised aluminium layer. Alternatively, or additionally, the intermediate thermoplastic bonding layer comprises light reflecting, white pigments to improve the light barrier properties of the laminate.

For thinner low-cost segment packaging laminates, which have thinner paper layer(s), the intermediate thermoplastic bonding layer may further comprise inorganic particles in the form of light reflecting, white pigments to improve the light barrier properties of the packaging laminate. Additionally, or alternatively, the substrate polymer film for vapour deposition further comprises inorganic particles in the form of light absorbing, black pigments to improve the light barrier properties of the packaging laminate, preferably carbon black. The black colour-of the innermost light absorbing film, is then advantageously hidden towards the outside by a metallised layer and/ or the white-pigmented intermediate bonding layer.

For higher performance packaging laminates, e.g. requiring longer aseptic shelf life for more sensitive products, it is of course possible to add further barrier layers. One way of increasing further the oxygen barrier properties of the packaging laminate may be to use a thermoplastic bonding layer including a layer of melt-extrudable barrier layer, for the bonding of the vapour deposition coated inside film to the liquid-film barrier coated paperboard to each other. In this way, the only thing to change in order to produce a higher performance packaging laminate, would be to include additional melt extrusiori polymer layer(s) in the converting process at the lamination stage (e.g. a further barrier layer and possibly one or two melt co-extrusion tie layers). Alternatively, such a gas barrier polymer may also be possible to (co-)extrusion coat or laminate into the layers on the inner side of the water vapour barrier layer.

According to a preferred embodiment, higher gas barrier properties may be achieved by liquid film coating an additional gas barrier layer also onto the outer side of the first paper layer. Furthermore, back transfer of paper dust in the subsequent handling of coated paper webs on reels may be prevented by such a coating on the back-side.

Alternatively, or in addition, a gas barrier coating layer may be coated also onto the inner side of the second paper layer.

According to a further aspect of the invention, there is provided a packaging container manufactured from the packaging laminate of the invention, having high oxygen and water vapour barrier properties, good package integrity and internal adhesion between laminate layers, which properties are on par with those of conventional aluminium foil packaging containers, commercially available today for liquid food packaging.

According to yet a further aspect of the invention, there is provided a method for manufacturing of the packaging laminate as defined in independent claim 13.

Thus, the method comprises the steps of providing a first, inner layer of paper, providing a liquid gas barrier composition containing a polymer binder dispersed or dissolved in an aqueous or solvent-based liquid medium, forming a thin oxygen gas barrier layer comprising said polymer binder by coating the liquid composition onto a first, inner side of said layer of paper and subsequently drying to evaporate the liquid, providing a polymer substrate film, vapour depositing a barrier layer onto the substrate polymer film, laminating the vapour deposited film to the inner side of the oxygen gas barrier layer by means of a second, intermediate polymer bonding layer, providing a second, outer layer of paper, laminating the first and second paper layers to each other by means of a first intermediate bonding layer of thermoplastic polymer, providing an innermost layer of a heat sealable polymer inside of the vapour deposited layer, and at any stage of the method, providing an outermost layer of a heat sealable thermoplastic polymer material outside of the second paper layer on the outermost, opposite side, of the packaging laminate.

Alternatively, the method comprises the steps of providing a first, inner layer of paper, providing a liquid gas barrier composition containing a polymer binder dispersed or dissolved in an aqueous or solvent-based liquid medium, forming a thin oxygen gas barrier layer comprising said polymer binder by coating the liquid composition onto a first, inner side of said layer of paper and subsequently drying to evaporate the liquid, providing a melt processable polymer composition comprising a polyolefin-based polymer matrix and inorganic filler particles distributed therein, providing a water vapour barrier layer from the melt processable polymer composition by a melt extrusion method, laminating the extruded water vapour barrier layer to the inner side of the oxygen gas barrier layer, laminating the water vapour barrier layer to the inner side of the oxygen gas barrier layer by means of a second, intermediate polymer bonding layer, providing a second, outer layer of paper, laminating the first and second paper layers to each other by means of a first intermediate bonding layer of thermoplastic polymer, providing an innermost layer of a heat sealable polymer inside of the water vapour barrier layer, and at any stage of the method, providing an outermost layer of a heat sealable thermoplastic polymer material outside of the second paper layer on the outermost, opposite side, of the packaging laminate.

For high-barrier packaging, the second paper layer is a core layer providing the final package with fold-forming dimensional stability by means of its significantly higher stiffness properties, because the barrier layers may be better preserved in a dimensionally stable packaging container, than in a flexing material, such as in a pouch-like package.

According to a preferred embodiment, the oxygen gas barrier polymer contained in the liquid composition is selected from a group consisting of PVOH, water-dispersible EVOH, acrylic or methacrylic acid polymers, polysaccharides, polysaccharide derivatives and combinations of two or more thereof and the water vapour barrier layer is a metal vapour deposition layer.

In a preferred method of the invention, the liquid gas barrier composition is coated directly onto the inner side of the layer of paper or paperboard. Because the packaged food product is, or contains, a liquid, there is a constant transport of water vapour through the laminate from the inside to the outside, why it is better to allow the water vapour to escape outwards through the liquid film coated layer r and continue outwards rather quickly through the paper layer. If the paper layer is coated by a layer of polymer, the water vapour is kept and trapped for a longer time on the inside of the paper layer and raising the relative humidity in the liquid film coated barrier layer. It is thus preferred that the liquid film coated layer is directly adjacent and contiguous to the paper layer.

Preferably, the oxygen gas barrier layer is applied as two part-layers in two subsequent steps with intermediate drying. When applied as two part-layers, each layer is applied in amounts from 1 to 2,5 g/m$^2$, preferably from 1 to 2 g/m$^2$.

Generally, the polymer substrate film for vapour deposition is a thermoplastic polymer film, preferably a polyolefin-based film.

According to a preferred embodiment of the method of the invention, the polymer substrate film for vapour deposition coating is a film which includes the innermost heat sealable layer, and more preferred, the film consists mainly of heat sealable layers. The film according to the invention is preferably manufactured by extrusion film blowing, because of the reliability and cost-efficiency in that process. However, films manufactured by film-casting do also fall within the scope of the invention.

According to a further embodiment of the method of the invention, the method further comprises the step of mono-orienting a polymer substrate film for vapour deposition coating of a metal compound, the polymer substrate film comprising in the majority low density polyethylenes.

Preferably, the polymer substrate film, comprising in the majority low density polyethylenes, has a thickness of 20 μm or less, more preferably 15 μm or less.

According to one embodiment, the polymer substrate film comprises a skin layer of carboxylic group modified polyolefin, such as an ethylene copolymer, or graft copolymer, with acrylic acid or methacrylic acid monomer units, onto which skin layer the metal or inorganic metal compound is vapour deposited. Preferably, the modified polyolefin is an ethylene acrylic acid copolymer (EAA), and the skin layer may be very thin, i.e. from 0,5 to 5 μm, more preferably from 1 to 3 μm. Also other polymers may be conceivable for the skin layer.

Preferably, the layer of the vapour deposited compound has a thickness of from 5 to 500 nm (from 50 to 5000 Å).

According to one embodiment, the method of the invention further comprises the step of laminating the vapour deposited polymer substrate film to the inner side of the oxygen gas barrier layer, by means of an intermediate polymer bonding layer, preferably a thermoplastic polymer bonding layer. The oxygen barrier performance of the liquid film coated oxygen barrier layer is significantly improved when it is coated or laminated to an adjacent layer of, preferably thermoplastic, polymer, and such a layer also contributes to an increased overall abuse resistance of the packaging laminate. In the case of long-term storage and transport of aseptic packaging, it is very important that the packaging container has sufficient strength and abuse resistance for the transport and handling circumstances. Preferably, such intermediate thermoplastic bonding layers are selected among polyolefins and polyolefin-based polymers. In the case of extrusion lamination of an aluminium metal or aluminium oxide coated substrate, the intermediate bonding layer is advantageously a conventional LDPE. The intermediate bonding layer also provides an important contribution to the inside thermoformable bulk of heat sealable polymer materials, which in turn contributes to good quality of the seals in a packaging container. It has been found that a preferable amount of the intermediate polymer bonding layer is from 7 to 20, preferably from 10 to 18 μm.

According to an alternative embodiment, the method instead comprises the further steps of liquid film coating an intermediate, preferably thermoplastic, polymer bonding layer onto the applied oxygen gas barrier layer, a drying step, and subsequent steps of heat-pressure laminating the polymer substrate film coated with the vapour deposited metal compound to the intermediate polymer bonding layer. For such heat-pressure lamination, the intermediate liquid film coated bonding layer is advantageously an adhesive polymer, such as polyolefin-based copolymers or graft copolymers with (meth)acrylic acid or maleic anhydride monomer units. The latter embodiment may advantageously be used in cases where the thickness of the intermediate polymer bonding layer may be lower and where the requirements on abuse resistance are not so high, e.g. preferably from 0,5 to 5 μm, preferably from 0,5 to 3 μm.

In one embodiment when the water vapour barrier layer is a filled polyolefin layer, a water vapour barrier layer of a melt processable polymer composition may be provided and laminated to the inner side of the oxygen gas barrier layer by means of extrusion coating or co-extrusion coating onto the coated first paper layer.

Alternatively, a water vapour barrier layer of a melt processable polymer composition may be provided by extrusion or co-extrusion casting or blowing of a film, which is subsequently laminated to the inner side of the first paper layer, by means of extrusion laminating with an intermediate thermoplastic bonding layer.

EXAMPLES AND DETAILED DESCRIPTION

In the following, preferred embodiments of the invention will be described with reference to the drawings, of which:

Fig. 1a through 1f are schematically showing, in cross-section, different embodiments of a packaging laminate produced according to the invention,

Fig. 2a is grammatically showing a method of liquid film coating of a polymer composition onto a paper substrate layer,

Fig. 2b, 2c and 2d are schematically showing example methods of manufacturing the packaging laminates described in Figures 1a-1f,,

Fig. 3 is showing a diagrammatic view of a plant for co-extrusion blowing and subsequent mono-orientation of a preferred substrate polymer film according to the invention,

Fig. 4 is showing a diagrammatic view of a plant for vapour deposition of a preferred metal or metal inorganic compound onto the substrate polymer film produced in Fig.3,

Fig. 5a and 5b are showing examples of packaging containers produced from the packaging laminate according to the invention,

Fig. 6 is showing the principle of how such packaging containers are manufactured from the packaging laminate in a continuous form, fill and seal process, and

Fig.7 shows how the oxygen transmission of a packaging laminate according to the invention, having a metallised film on the inside, varies for different grades of paperboard, versus a packaging laminate without the vapour deposited metallised film on the inside.

EXAMPLE 1

A packaging laminate was produced by liquid film coating of 2 x 1 g/m2 of an aqueous gas barrier composition of dissolved and dispersed PVOH and 30 weight-% bentonite clay, calculated on dry matter, in two consecutive steps with drying in between, onto a thin paper having a surface weight of about 50 g/m2.

Preparation of the aqueous gas barrier composition: An aqueous dispersion of from about 1-5 weight-% of exfoliated laminar montmorillonite particles (Kunipia F from Kunimine Kogyo Co.) having an aspect ratio of about 50-5000, is blended with an aqueous solution of about 10 weight-% of PVOH (Mowiol 15-99, having a saponification degree of above 99 %) at 60-90 °C during 1-8 hours. The dispersion of exfoliated laminar mineral particles may be stabilised by means of a stabiliser additive. Alternatively, the laminar mineral particles are exfoliated directly in the PVOH-solution at 60-90 °C during 1-8 hours.

Half of the first paper layer material with the liquid film coated gas barrier was coated with a low density polyethylene inside consisting of 25 g/m2 LDPE and an innermost layer of 15 g/m2 m-LLDPE. The other half of the material was laminated with an aluminium metallised mono-oriented LDPE film, by means of a melt extruded LDPE lamination layer. The mono-oriented film was 18 $\mu$m thick. The LDPE lamination layer was about 15 $\mu$m thick. The oxygen transmission of the metallised mono-oriented film was measured to about 400 cc /m2/ day/ atm at 23 °C, 80 % RH, which corresponds to about 100 cc/m2/day/atm at 23 °C, 50 % RH.. Subsequently, this pre-laminate thus obtained was laminated to a paperboard and outermost and innermost heat sealable layers.

The oxygen transmission was measured on flat laminated packaging material and on a finished packaging container of the Tetra Brik® type (1 litre).

The conclusions are that the improvement between the two packaging laminates is higher than expected. The rather low oxygen barrier level of the metallised layer contributes surprisingly as much as the far better PVOH oxygen barrier layer. Already on the flat packaging laminate the oxygen barrier results are thus surprisingly good. The true surprise comes, however, from the results on finished packages. Whereas the finished packaging container from the laminate with a PE inside structure loses oxygen barrier properties considerably, the other packages with a metallised PE-film inside the structure only increases oxygen transmission to a controllable level. It seems that the metallised film inside has repaired and greatly reduced the impact of the damages to the oxygen barrier layer in the packaging container.

There has thus been seen a synergy effect in oxygen barrier properties at standard testing climate at 23 °C and 50 % RH.

Example 2

In an experiment where a similar liquid gas barrier composition was coated onto different paperboard grades, it was furthermore seen that greatly varied results in oxygen transmission were obtained. It has not been fully understood why the different paperboards gave rise to the different results in oxygen barrier. The different paperboards were coated as above by 2 x 1 g/m$^2$ of PVOH with montmorillonite and then further laminated with a PE inside or with a metallised PE-film, respectively, as described above. The oxygen transmission on flat packaging laminate was measured at 23 °C and 50% RH. The following paperboards were coated (numbered from 1 to 8):

1. Frövi 260 mN
2. Frovi 320 mN
3. Korsnäs 260 mN
4. Korsnäs 150 mN
5. Korsnäs 80 mN
6. Stora Enso 260 mN
7. International Paper 260 mN
8. Klabin 260 mN

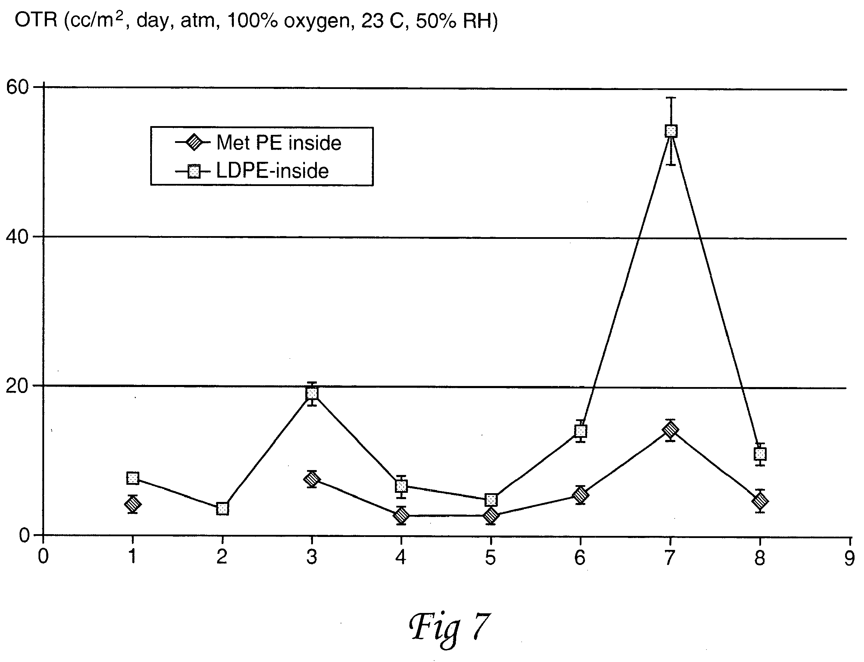

As can be seen in the diagram of Figure 7, the differences in oxygen transmission values (cc/m2, day, atm 100 % oxygen, 23 °C, 50% RH) are evened out by the addition of the metallised film to the packaging laminate (Met-PE-inside versus LDPE-inside). Consequently, it seems that, the film, vapour deposited with a metal compound, evens out and repairs some kind of defects in the oxygen barrier, arising from some differing properties of the paperboard.

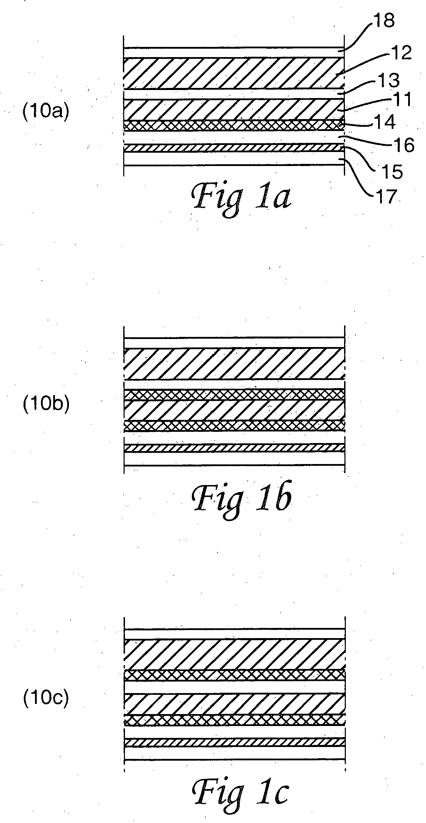

In Fig. 1a-1d, there are shown, in cross-section, different embodiments of a packaging laminate 10a for aseptic packaging and long-term storage under ambient conditions, produced from the coated first paper layer of Example 1 of the invention.

In Fig. 1a, the laminate comprises a first paper layer 11, having a surface weight of about 50 g/m2, which is laminated to a second paperboard layer 12, having a bending force of 260 mN, by means of a first intermediate bonding layer 13 . The laminate further comprises a thin oxygen gas barrier layer 14 formed by liquid film coating of a liquid gas barrier composition, and subsequent drying, onto the inner side of the paper layer 11. The oxygen gas barrier composition comprises an aqueous solution of PVOH and a dispersion of inorganic laminar particles, in particular exfoliated bentonite clay at 30 weight-% based on dry weight, and after drying, the coated layer thus comprises PVOH with the flake-formed or laminar particles distributed in a layered manner within the PVOH matrix or continuous phase. The packaging laminate further comprises a polymer substrate film 17, coated with a thin vapour deposited layer of aluminium metal 15 at a thickness of from 10 to 30 nm. The vapour deposition coated polymer film 15-17 is laminated to the liquid film coated first paper layer 11-14, by a second intermediate bonding layer 16 of a polyolefin-based polymer, preferably a low density polyethylene (LDPE). The intermediate bonding layer 16 is preferably formed by means of extrusion laminating the oxygen barrier coated paper layer and the vapour deposited substrate film to each other. The thickness of the intermediate bonding layer 16 is then preferably from 7 to 20 μm, more preferably from 12-18 μm. However, also other lamination methods are conceivable according to the invention. An outer liquid tight and heat sealable layer 18 of polyolefin is applied on the outside of the second core paperboard layer 12, which side is to be directed towards the outside of a packaging container produced from the packaging laminate. The polyolefin of the outer layer 18 is a conventional low density polyethylene (LDPE) of a heat sealable quality.

Alternatively, an innermost liquid tight and heat sealable layer 17 is arranged on the inside of the vapour deposited layer 15, which is to be directed towards the inside of a packaging container produced from the packaging laminate, whereby the layer 17 will be in contact with the packaged product. The innermost heat sealable layer comprises low density polyethylene (LDPE), preferably including also an LLDPE produced by polymerising an ethylene monomer with a C4-C8, more preferably a C6-C8, alpha-olefin alkylene monomer in the presence of a metallocene catalyst, i.e. a so called metallocene LLDPE (m-LLDPE).

The innermost heat sealable layer 17 may consist of two or several part-layers of the same or different kinds of low density polyethylene and may constitute a polymer substrate film 17. A polymer substrate film 17 may be mono-oriented to a thickness of 20 μm or below, preferably from 15 μm to 20 μm, and may have a thin metal-receiving skin layer of an ethylene acrylic acid copolymer (EAA). The thickness of the metal-receiving layer is from 1 to 3 μm. In special cases, where a thicker heat sealable layer is needed, it is of course possible, although not preferred from a cost perspective, to apply a further heat sealable polyethylene layer onto the inside of the innermost layer 17.

Fig. 1b shows the same packaging laminate as described in Fig. 1a, with the difference that the first paper layer is coated with a gas barrier layer 14a also on its other, outer side.

Fig. 1c shows the same packaging laminate as described in Fig. 1a, with the difference that the second paper layer is coated with a further gas barrier layer 14b also on its inner side.

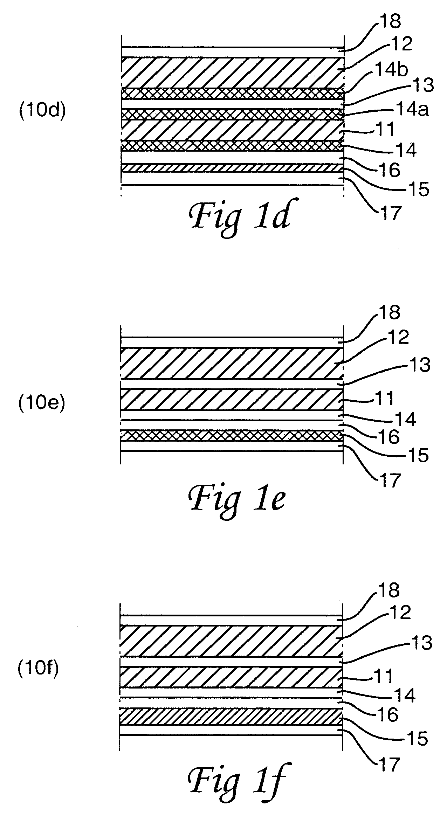

Fig. 1d shows the same packaging laminate as described in Fig. 1a, with the differences that the first paper layer is coated with a gas barrier layer 14a also on its other, outer side and the second paper layer is coated with a still further gas barrier layer 14b also on its inner side.

The embodiments of figures 1b, 1c and 1d are all aimed to increase the oxygen gas barrier properties further, thus providing a high barrier laminate in a simple and cost-efficient manner.

EXAMPLE 3

With this example the synergistic water vapour barrier effect from the combination of a gas barrier layer comprising inorganic particles, when coated onto a single paperboard in a laminate, with an inside polyolefin-based water vapour barrier layer with inorganic filler particles as separate layers in a packaging lamiante, is shown.

According to the present invention, the gas barrier composition is coated onto the first paper layer. The laminated pre-made inside with the water vapour barrier and inside layers is laminated to a second paperboard layer in a final step. The barrier effects of the laminate of the invention will be at least as good as, or likely even better, according to the following example.

A packaging laminate was produced by liquid film coating of 2 x 1 g/m2 of an aqueous gas barrier composition of dissolved and dispersed PVOH and 30 weight-% bentonite clay, calculated on dry matter, in two consecutive steps with drying in between, onto a 320 mN CLC/C paperboard from Frövi.

Preparation of the aqueous gas barrier composition: An aqueous dispersion of from about 5-15 weight-% of exfoliated laminar montmorillonite particles (Kunipia F from Kunimine Kogyo Co.) having an aspect ratio of about 50-5000, is blended with an aqueous solution of about 30 weight-% of PVOH (Mowiol 15-99, having a saponification degree of above 99 %) at 60-90 °C during 1-8 hours. The dispersion of exfoliated laminar mineral particles may be stabilised by means of a stabiliser additive. Alternatively, the laminar mineral particles are exfoliated directly in the PVOH-solution at 60-90 °C during 1-8 hours.

On the inside of the thus applied gas barrier layer is laminated a layer of HDPE comprising talcum particles having a particle size distribution such that 95 % of the particles are smaller than 5,5 um, while 50 % of the particles are smaller than 2,2 um, at an amount of 30 weight-%, the thickness of the HDPE layer being approximately 20 g/m$^2$. The filled HDPE layer is laminated to the oxygen barrier coated paperboard by means of co-extrusion together with an intermediate lamination layer consisting of conventional LDPE at a thickness of 15 g/m$^2$.

For comparison, a corresponding laminate having no layer of filled HDPE is prepared, i.e. having only two layers of conventional LDPE at a thickness of 15 g/m$^2$ , each.

For further comparison, corresponding laminates having the same inside layers of LDPE and filled HDPE, respectively, but not the liquid film coated oxygen barrier layer of PVOH.

The water vapour barrier properties of each respective laminate, were determined by measuring weight loss on a Gravitest 6300 device (from GINTRONIC in Switzerland), by an automised weighing system. The measurements were performed at 23 °C and 50 % RH (relative humidity), according to the DIN 53122 and ASTM E96/80 norms, during 6 weeks. The values obtained are expressed as g/m$^2$ day.

The reason for not measuring by conventional water vapour transmission methods, is that such methods are not accurate enough and also, laminates having paperboard layers are not suitable for measurement in conventional WVTR measurement equipment and methods, such as Permatran. The water vapour migration through the laminate takes place in the opposite direction through the laminate, and therefore such a measurement method does not well reflect the reality of a laminate used in a packaging container.

Accordingly, measurements obtained by the Gravitest 6300 method were more realistic and produced values at an accuracy of is +/- 0,1 mg.

| Sample | Material Structure (g/m$^2$) | WL Gravitest |
|---|---|---|
| 4512-4a-C92 | / LDPE 12/ paperboard/ PVOH+30 %b / LDPE 15/ LDPE 15/ | 0,29 |
| 4512-4i | / LDPE 12/ paperboard/ LDPE 15/ LDPE 15/ | 0,61 |
| 4512-4a-C92 | /LDPE 12/ paperboard/ PVOH+30 %b /LDPE 10/ filled HDPE 20/ | 0,18 |
| 4512-4j | / LDPE 12/ paperboard/ LDPE 10/ filled HDPE 20/ | 0,31 |

When calculating barrier properties of a laminated, layered, structure, the barrier contribution by each layer (Barr 1, Barr 2.... Barr i) to the total barrier value (Barr $\Sigma$ 1-i) of the complete laminate is related according to the following formula:

$$1/ \text{Barr } \Sigma\ 1\text{-}i\ =\ 1/ \text{Barr } 1 + 1/\ \text{barr } 2\ +\ \ldots\ldots\ldots + 1/ \text{Barr } i$$

Accordingly, by inserting the total water vapour barrier value for a laminate having a structure with a LFC layer of PVOH and bentonite inorganic particles and a conventional LDPE layer towards the inside, and the value of a structure having the LDPE inside layer alone, the rest of the laminate (i.e. the PVOH layer) has a calculated WV barrier value of 0,66.

$$1/\text{Total WL}\ =\ 1/ \text{PVOH+b WL}\ +\ 1/\ 2 \times \text{LDPE WL}$$

and

$$1/\ 0{,}49\quad = 1/\text{PVOH}_{\text{LDPE}}\quad +\ 1/\ 1{,}88$$

$$\rightarrow\quad \text{PVOH}_{\text{LDPE}} = 0{,}66$$

When instead inserting the total water vapour barrier value for a laminate having a structure with a LFC layer of PVOH and bentonite inorganic particles and a filled HDPE layer towards the inside, and the value of a structure having the filled HDPE inside layer alone, the rest of the laminate (i.e. the PVOH layer) has a calculated WV barrier value of 0,39.

$$1/\text{Total WL}\ =\ 1/ \text{PVOH+b WL}\ +\ 1/\ (\text{LDPE + filled HDPE}) \text{ WL}$$

$$1/\ 0{,}23\quad =\ 1/\text{PVOH}_{\text{f-HDPE}}\quad +\ 1/0{,}55$$

$$\rightarrow\quad \text{PVOH}_{\text{f-HDPE}} = 0{,}39$$

This water vapour barrier value is much lower than expected, and in fact improved by 40 % compared to the structure with the LDPE inside layer.

Also, surprisingly, the oxygen barrier properties are now improved to well above sufficient for long term storage of packages filled with liquid food product.

It is possible to further increase the gas barrier properties a little by coating thicker layers of the gas barrier composition, or to fill the PVOH layer with higher amount of inorganic particles. There is, also, a more significant gain in odour and flavour barrier properties, by coating a thicker and more densely filled gas barrier layer composition. An excellent example of such a barrier composition comprises PVOH and between 20 and 60 weight-%, preferably from 20 to 55 weight-%, more preferably from 30 to 50 weight-% of talcum particles.

In Fig. 1e, there is shown, in cross-section, another embodiment of a packaging laminate 10e for aseptic packaging and long-term storage under ambient conditions, produced according to the invention. The laminate comprises a first paper layer 11, having a surface weight of about 50 g/m2, laminated to a second paperboard layer 12, having a bending force of 260 mN, by means of a first intermediate thermoplastic bonding layer 13 of LDPE. A thin oxygen gas barrier layer 14 is formed by liquid film coating of a liquid gas barrier composition, and subsequent drying, onto the first paper layer 11. The oxygen gas barrier composition comprises an aqueous solution of PVOH and a dispersion of inorganic laminar particles, in particular exfoliated bentonite clay at 30 weight-% based on dry weight, and after drying, the coated layer thus comprises PVOH with the flake-formed or laminar particles distributed in a layered manner within the PVOH continuous phase. The packaging laminate further comprises a water vapour barrier layer 15, arranged between said applied oxygen, gas barrier layer 14 and an innermost heat sealable polyolefin layer 17, which water vapour barrier layer 15 comprises a polyolefin-based matrix polymer and inorganic filler particles distributed within the matrix polymer. The water vapour barrier layer 15 is laminated to the liquid film coated core layer 11-14, by direct extrusion or co-extrusion coating of the polyolefin-based polymer matrix composition, being a high density polyethylene (HDPE) composition with inorganic filler particles. The layer 15 may be co-extrusion coated onto the first paper layer together with an intermediate tie layer of an adhesive polyolefin-based polymer (not shown). An outer liquid tight and heat sealable layer 18 of polyolefin is applied on the outside of the second paper layer 12, which side is to be directed towards the outside of a packaging container produced from the packaging laminate. The polyolefin of the outer layer 18 is a conventional low density polyethylene (LDPE) of a heat sealable quality. An innermost liquid tight and heat sealable layer 17 is arranged on the inside of the water vapour barrier layer 15, which is to be directed towards the inside of a packaging container produced from the packaging laminate, whereby the layer 17 will be in contact with the packaged product. The innermost heat sealable layer may comprise LDPE and a linear low density polyethylene (LLDPE), preferably being an LLDPE produced by polymerising an ethylene monomer with a C4-C8, more preferably a C6-C8, alpha-olefin alkylene monomer in the presence of a metallocene catalyst, i.e. a so called metallocene LLDPE (m-LLDPE). The innermost heat sealable layer 17 may consist of two or several part-layers comprising the same or different kinds of LDPE's, (m-)LLDPE's, or blends thereof, and may be co-extrusion coated together with the water vapour barrier layer 15 with an intermediate tie layer of the modified-polyolefin types mentioned previously, or (co-)extrusion coated onto the water vapour barrier layer 15 in a subsequent (co-)extrusion-coating step, the co-extrusion layers also including a tie layer. The grammage thickness of the heat sealable layer 17 may be about 15 g/m$^2$. The thickness of the water vapour barrier layer is preferably about 20 g/m$^2$. The thickness of the intermediate bonding layer is preferably from 10 to 15 g/m$^2$.

Fig. 1f shows a similar packaging laminate 10f as described in Fig. 1e, with the difference that the water vapour barrier layer 15, comprising a polyolefin-based matrix polymer and inorganic filler particles distributed within the matrix polymer, is part of a pre-manufactured film, which is laminated to the oxygen-barrier coated first paper layer. The water vapour barrier layer 15 is pre-manufactured as a single layer film, by a melt extrusion process, such as extrusion film blowing or extrusion film casting, resulting in a film 15. The film 15 is laminated to the liquid film coated barrier layer 14, by a second intermediate bonding layer 16 of a polyolefin-based polymer, preferably a tie or adhesive based on low density polyethylene. The second intermediate bonding layer 16 is thus formed by extrusion laminating the oxygen barrier coated first paper layer 11-14 and the water vapour barrier film 15 to each other. A heat sealable polymer layer 17 is subsequently extrusion-coated onto the inner side of the water vapour barrier layer 15.

The grammage thickness of the heat sealable layer 17 may be about 15 g/m$^2$. The thickness of the water vapour barrier layer 15 may preferably be about 30 g/m$^2$. The thickness of the second intermediate bonding layer 16 is preferably from 10 to 15 g/m$^2$.

Alternatively, the water vapour barrier layer 15 is pre-manufactured together with the innermost heat sealable layer 17, by a melt cho-extrusion process, such as co-extrusion film blowing or co-extrusion film casting, resulting in a multilayer film 15-17. The multilayer film 15-17 is then laminated to the liquid film coated barrier layer 14, by a second intermediate bonding layer 16 of a polyolefin-based tie polymer, preferably an ethylene acrylic acid copolymer (EAA). The intermediate bonding layer 16 is thus formed by extrusion laminating the oxygen barrier coated first paper layer 11-14 and the water vapour barrier, heat sealable film 15-17 to each other. The thickness of the intermediate bonding layer 16 is preferably from 10 to 20 $\mu$m and the thickness of the water-vapour barrier, heat sealable film is from 15 to 35 $\mu$m.

In an alternative embodiment, not shown, a similar packaging laminate as described in Fig. 1e but with the vapour barrier layer pre-manufactured film 15, comprising multiple, micrometer-thin, alternating layers of the polyolefin-based matrix polymer with inorganic filler (15-1) and layers of a tougher or more shock absorbing polymer (15-2), such as for example LLDPE, m-LLDPE, VLDPE or ULDPE. The micro-multilayer film 15 is laminated to the liquid film coated barrier layer 11-14, by an intermediate bonding layer 16 of a polyolefin-based polymer, preferably a low density polyethylene (LDPE). The intermediate bonding layer 16 is thus formed by extrusion laminating the oxygen barrier coated core layer 11-14 and the water vapour barrier film 15 to each other. On the inside of the water vapour barrier film 15, there is co-extrusion coated an innermost layer 17 of heat sealable polymer(s), preferably of low density polyethylene(s).

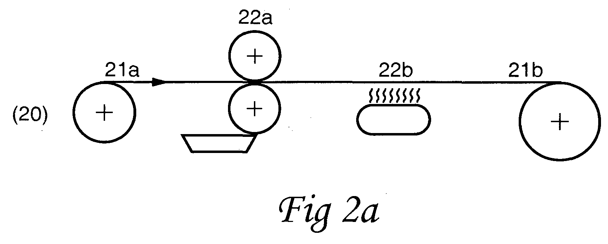

In Fig. 2a, the method of liquid film coating of the liquid oxygen barrier composition onto the paper or paperboard layer is grammatically shown. The paper layer 21 a is fed from a storage reel towards a liquid film coating station 22a, where the liquid gas barrier composition is applied at an amount such that the amount of coated and dried layer is about 2-5 g/m2, when the coated paper has passed the drying station 22b. Preferably, the liquid film coating operation is carried out in two steps, i.e. by first coating 1-2,5 g/m2, drying in an intermediate step and then coating a second time at 1-2,5 g/m2 and finally drying the total liquid film coated layer to obtain an oxygen barrier coated paper layer 21 b, 21c.

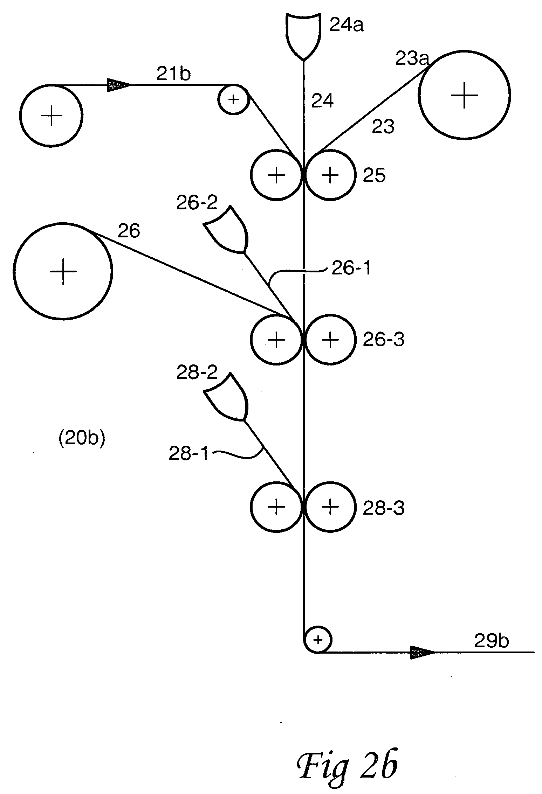

In Fig. 2b, the lamination process 20b is shown, wherein an oxygen barrier coated first paper layer 21 b is laminated to a vapour deposited substrate polymer film 23; 42, having a thin vapour deposited coating 23a on the side facing towards the paper layer, by extruding a first intermediate bonding layer of LDPE 24 from an extrusion station 24a and pressing together in a roller nip 25. In the case of a metallised vapour deposition coating, the contacting surface of the substrate film, or of the receiving layer, is pre-treated by a surface treatment (not shown) before pressing the layers together in the nip. Subsequently, the laminated paper and film are laminated to a second paperboard layer 26 by extruding a second intermediate bonding layer of LDPE 26-1 from an extrusion station 26-2 and pressing together in a roller nip 26-3. Finally, the paper and barrier laminate passes a second extruder 28-2 and lamination nip 28-3, where an outermost heat sealable layer of LDPE 28-1 is coated onto the outer side of the second paper layer. Finally, the finished packaging laminate 29b, i.e. the packaging laminate shown in Fig. 1a, is wound onto a storage reel, not shown. The packaging laminates in Fig. 1b, 1c and 1d, are made in basically the same way, except additional gas barrier liquid film coatings are applied onto the outer side of the first paper layer and/or onto the inner side of the second paper layer, in further liquid film coating steps, as shown in Fig 2a.

Alternatively, the outermost heat sealable layer of LDPE may be coated on to the outer side of the second paper layer, before laminating to a pre-made inside of the first paper layer and the barrier layers.

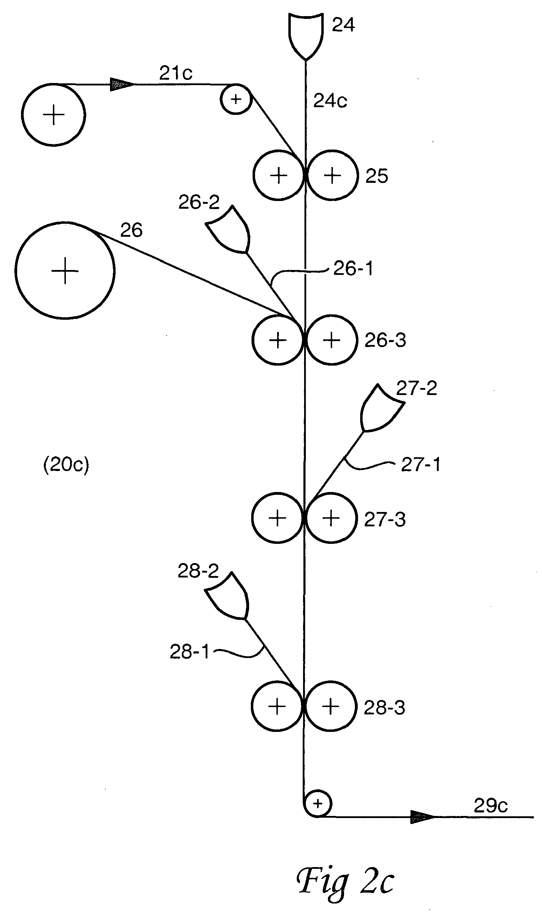

In Fig. 2c, the lamination process 20c, for the manufacturing of the packaging laminate 10e of Fig. 1e, is shown, wherein the oxygen barrier coated layer 21 c is directly co-extrusion coated by a multilayer melt film 24 a, comprising a tie layer for bonding to the layer 21b and a water vapour barrier layer 15 adjacent to each other, the water vapour barrier layer 15 comprising a polyolefin-based matrix polymer, being HDPE, and inorganic filler particles, being talcum, distributed within the matrix polymer. Subsequently, the laminated paper and film are laminated to a second paperboard layer 26 by extruding a second intermediate bonding layer of LDPE 26-1 from an extrusion station 26-2 and pressing together in a roller nip 26-3. In a subsequent extrusion coating step, an innermost liquid tight and heat sealable layer 17 of low density polyethylene is further extrusion coated onto the water vapour barrier layer 15. The innermost layer or layers 17 are fed through a feedblock 27-2 and applied as a melt curtain film 27-1 onto the water vapour barrier layer 15 in a roller nip station 27-3. Alternatively, extrusion coating of the innermost heat sealable layer(s) is carried out together with the water vapour barrier layer 15, whereby the multilayer melt film 24c may also comprise a co-extruded innermost liquid tight and heat sealable layer 17 on the inner side of the water vapour barrier layer 15. Thus, the shown extrusion coating station 27 may be omitted. Finally, the laminated paper and film passes a second extruder feedblock 28-2 and lamination nip 28-3, where an outermost heat sealable layer of LDPE 18; 28-1 is coated onto the outer side of the second paper layer. Finally, the finished packaging laminate 29c, i.e. the packaging laminate structure 10e is wound onto a storage reel, not shown.

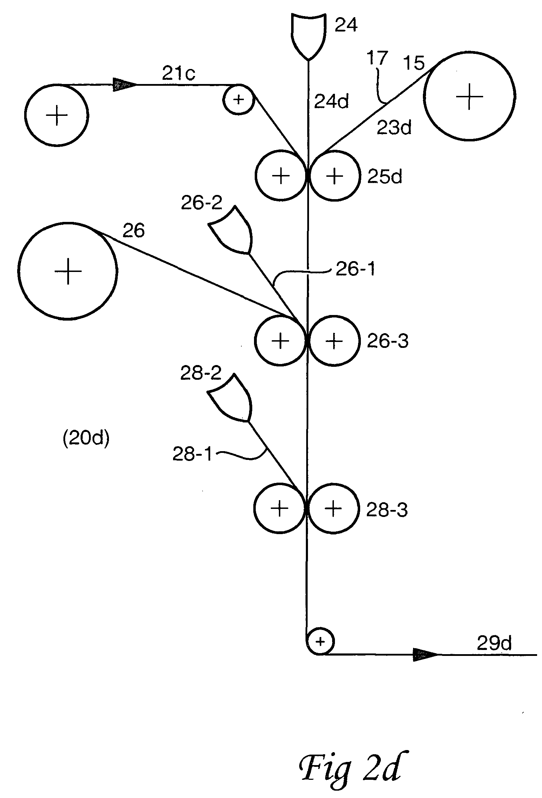

In Fig. 2d, the lamination process 20d is shown, for the manufacturing of the packaging laminate 10f of Fig. 1f, wherein the oxygen barrier coated core layer 21 c is laminated to a pre-manufactured multilayer polymer film 23d, comprising a water vapour barrier layer 15 of a polyolefin-based polymer, preferably HDPE, with inorganic particles distributed therein, by extruding an intermediate bonding layer of LDPE 24d from an extrusion station 24 and pressing together in a roller nip 25d. The pre-manufactured polymer film 23d further comprises an innermost liquid tight and heat sealable layer 17 arranged on the inner side of the water vapour barrier layer 15, to be directed towards the inside of a finished packaging container, the two layers 15 and 17 having been co-extrusion melt processed together in a co-extrusion film blowing method or in a co-extrusion film casting method. Subsequently, the laminated first paper and film passes a second extruder feedblock 26-2 and is laminated to a second paper layer 26 in a lamination nip 26-3, where an intermediate bonding layer of LDPE 16; 26-1 is extrusion laminated between the two paper-containing webs. Finally, the laminated paper core 12-11-14 and multilayer film 15-17 passes a second extruder feedblock 28-2 and a lamination nip 28-3, where an outermost heat sealable layer of low density polyethylene 18; 28-1 is coated onto the outer side of the second paper layer. Finally, the finished packaging laminate 29d; 10f is wound onto a storage reel, not shown.

Alternatively, the innermost liquid tight and heat sealable layer 17, to be directed towards the inside of a finished packaging container, may be extrusion coated onto the laminated water vapour barrier film 15, in a separate extrusion coating step 27.

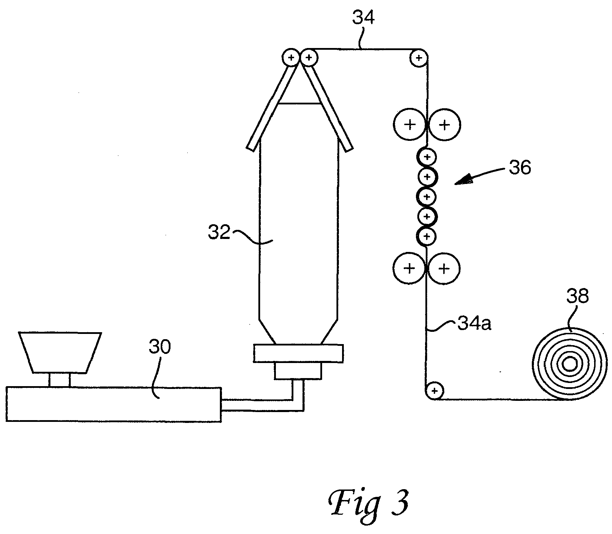

Fig. 3 is a diagrammatic view of a plant for (co-)extrusion blowing of an intermediate film, i.e. the substrate polymer film before being vapour deposition coated by a metal or by an inorganic metal compound. The one or more layers of the substrate polymer film are (co-)extruded from the extruder 30 and blown 32, to form a film 34 of relatively high thickness. Then, the film 34 is subjected to mono-axial orientation 36 between rollers, while it is hot, such that the thickness of the film is reduced 34a and the substrate polymer film becomes mono-oriented and gets a certain degree of stiffness due to a relatively higher degree of crystallinity than non-oriented polymer films. The resulting intermediate film is then optionally heat stabilised in an additional heating step before it is wound to a roll 38. The temperature profile through the set of rollers is optimised for orientating the specific structure of the film to avoid curling or breaking of the web. The film 34 has the form of a tube, when it exits the extrusion-blower 32, and may be opened/slit before being orientated. If necessary, two parallel orienters 36 may be used in that case. It is also possible to perform the orientating operation off-line from the film blower.

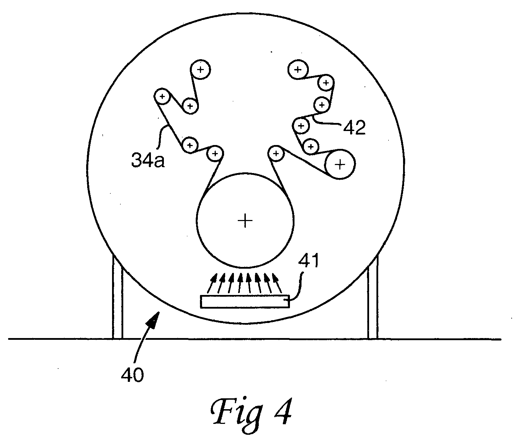

Fig. 4, is a diagrammatic view of an example of a plant for vapour deposition coating of the intermediate film produced in Fig. 3. The orientated film 34a from Fig. 3 is subjected, on the coating receiving side, to continuous evaporation deposition 40, of a metallised layer of aluminium, possibly in a mixture with aluminium oxide, and the coating is given a thickness of 5-100 nm, preferably 5-50 nm, so that the coated film 42 of the invention is formed. The aluminium vapour comes from a solid piece evaporation source 41.

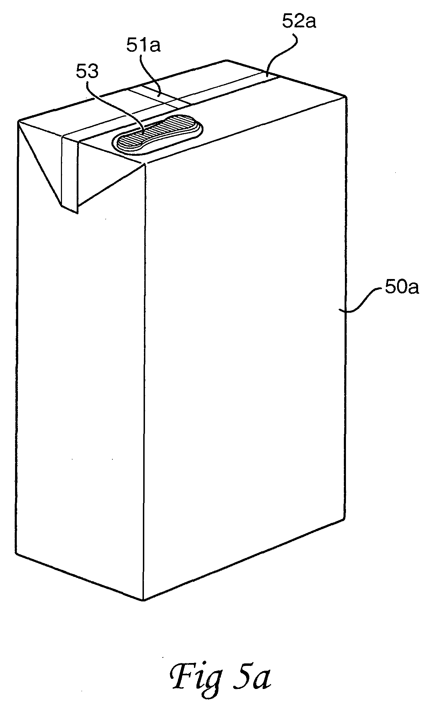

Fig. 5a shows a preferred example of a packaging container 50 produced from any of the packaging laminates 10 according to the invention. The packaging container is particularly suitable for beverages, sauces, soups or the like. Typically, such a package has a volume of about 100 to 1000 ml. It may be of any configuration, but is preferably brick-shaped, having longitudinal and transversal seals 51 and 52, respectively, and optionally an opening device 53. In another embodiment, not shown, the packaging container may be shaped as a wedge. In order to obtain such a "wedge-shape", only the bottom part of the package is fold formed such that the transversal heat seal of the bottom is hidden under the triangular corner flaps, which are folded and sealed against the bottom of the package. The top section transversal seal is left unfolded. In this way the half-folded packaging container is still is easy to handle and dimensionally stable when put on a shelf in the food store or on a table or the like.

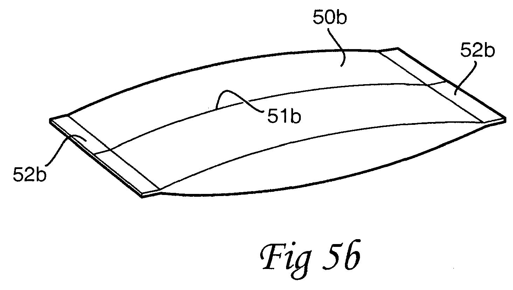

Fig. 5b shows an alternative, preferred example of a packaging container 50b produced from the packaging laminates 10 according to the invention. Since the packaging laminate for this type of package is thinner by having a thinner paper core layer, it is not dimensionally stable enough to form a parallelepipedic packaging container, and is not fold formed after transversal sealing 52b. It will thus remain a pillow-shaped pouch-like container and distributed and sold like this.

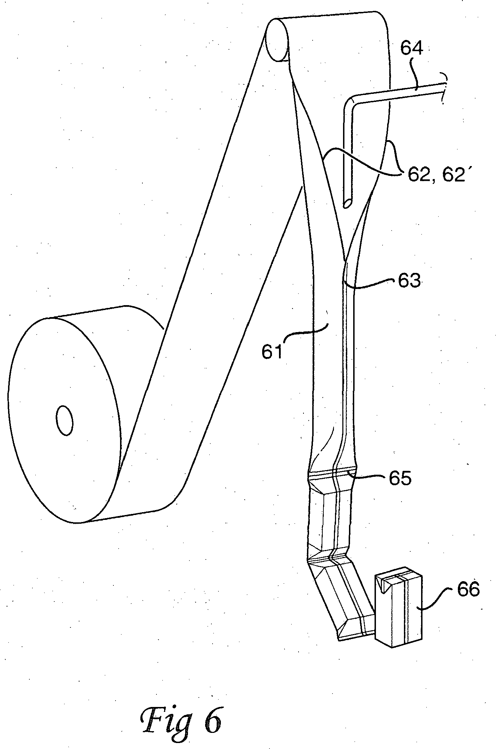

Fig. 6 shows the principle as described in the introduction of the present application, i.e. a web of packaging material is formed into a tube 61 by the longitudinal edges 62, 62' of the web being united to one another in an overlap joint 63. The tube is filled 64 with the intended liquid food product and is divided into individual packages by repeated transversal seals 65 of the tube at a predetermined distance from one another below the level of the filled contents in the tube. The packages 66 are separated by incisions in the transversal seals and are given the desired geometric configuration by fold formation along prepared crease lines in the material.

The invention is not limited by the embodiments shown and described above, but may be varied within the scope of the claims.

CLAUSES:

A. A non-foil packaging laminate (10) for packaging of liquid food or beverage, the packaging laminate comprising a first layer of paper (11), which first paper layer (11) is situated towards the inner side of the laminated packaging material and a second layer of paper (12) situated towards the outer side of the laminated packaging material, said first and second paper layers being laminated to each other by means of a first intermediate bonding layer (13) in a sandwich structure, the packaging laminate further comprising a gas barrier coating layer (14), coated onto the inner side of the first paper layer by liquid film coating of a liquid gas barrier composition onto said first paper layer and subsequent drying, the liquid composition containing a polymer binder dispersed or dissolved in an aqueous or solvent medium, and a further barrier layer towards water vapour (15) laminated and bonded to the barrier-coated inside of the first paper layer by means of a second intermediate polymer bonding layer (16), the packaging laminate further comprising an innermost layer of liquid tight, heat sealable thermoplastic polymer material (17) applied on the inner side of the further barrier layer (15), and an outermost layer of liquid, tight, heat sealable thermoplastic polymer material (18) on the opposite side of the packaging laminate, applied on the outer side of the second, core paper layer.

B. Packaging laminate according to clause A, wherein said further barrier layer towards water vapour (15) comprises a polyolefin-based matrix polymer and inorganic filler particles distributed within the matrix polymer.

C. Packaging laminate for liquid food packaging according to any one of clauses A or B, wherein said gas barrier coating layer(s) (14, 14', 14") is formed from a composition mainly comprising a gas barrier polymer selected from the group consisting of polyvinyl alcohol (PVOH), water dispersible polyvinylidene chloride (PVDC), water dispersible ethylene vinyl alcohol (EVOH), polysaccharides, including starch and starch derivatives, water dispersible polyamide (PA), and combinations of two or more thereof.

D. Packaging laminate according to any one of clauses A-C, wherein the inorganic particles comprised in the liquid gas barrier composition are laminar in shape, or flake-formed.

E. Packaging laminate according to clause D, wherein the inorganic particles comprised in the liquid gas barrier composition mainly consist of laminar nano-sized clay particles having an aspect ratio of from 50 to 5000.

F. Packaging laminate according to clause D, wherein the inorganic particles comprised in the liquid gas barrier composition mainly consist of laminar talcum particles having an aspect ratio of from 10 to 500.

G. Packaging laminate according to any one of the preceding clauses, wherein the water vapour barrier is a filled polyolefin layer and the said oxygen gas barrier layer (14) is applied at a total amount of from 1 to 6 $g/m^2$, preferably from 3 to 5$g/m^2$, more preferably 3 to 4 $g/m^2$, dry weight.

H. Packaging laminate according to any one of the preceding clauses, wherein the oxygen gas barrier layer (14) is applied directly adjacent onto the core layer of paper or paperboard.

I. Packaging laminate according to any one of clauses B-H, wherein the matrix polymer comprises mainly high density polyethylene (HDPE).

J. Packaging laminate according to any one of the preceding clauses, characterised in that the inorganic filler particles comprised in the polyolefin-based matrix polymer are flake-formed or have a laminar configuration.

K. Packaging laminate according to any one of the preceding clauses, wherein the inorganic filler particles comprised in the polyolefin-based matrix polymer are selected from talcum, mica and exfoliated nano-sized particles.

L. Packaging laminate according to any one of the preceding clauses, wherein said water vapour barrier layer (15) comprises multiple, alternating micro-meter thin layers of polyolefin-based matrix polymer with inorganic particles (15-1 and layers of a tough, shock-absorbing polymer (15-2) selected from the group consisting of LLDPE, m-LLDPE, VLDPE, ULDPE, elastomers and plastomers.

M. Packaging laminate according to any one of the preceding clauses, wherein said water vapour barrier layer (15) is bonded to the barrier-coated paper layer by an, intermediate thermoplastic polymer layer (16) selected from polyolefins and polyolefin-based adhesive polymers.

N. Method of manufacturing a packaging laminate (10a; 10b) according to any one of clauses A-M, comprising the steps of

- providing a layer of paper or paperboard (21 a),
- providing a liquid gas barrier composition containing a polymer binder dispersed or dissolved in an aqueous or solvent-based liquid medium and further containing inorganic particles dispersed in the composition,
- forming a thin oxygen gas barrier layer comprising said polymer binder and inorganic particles by coating (22a) the liquid composition as a film onto a first side of said layer of paper or paperboard and subsequently drying (22b) to evaporate the liquid,
- providing a melt processable polymer composition comprising a polylefin-based polymer matrix and inorganic filler particles distributed therein,
- providing a water vapour barrier layer (24a; 23b; 23c) from the melt processable polymer composition by a melt extrusion method,
- laminating the extruded water vapour barrier layer (24a; 23b; 23c ) from the melt processable polymer composition to the inner side of the oxygen gas barrier layer (21 b),
- providing an innermost layer (15) of a heat sealable polyolefin on the inside of the water vapour barrier layer (24a; 23b; 23c), and
- providing an outermost layer (16) of a heat sealable polyolefin on the outside of the core layer (11).

O. Method according to clause N, wherein the oxygen gas barrier layer (12) is applied in a total amount of from 1

to 6 g/m$^2$, preferably from 3 tov5 g/m$^2$, more preferably from 3 to 4 g/m$^2$, dry weight.

P. Method according to any one of clauses N-O, wherein the water vapour barrier layer (24a) of the melt processable polymer composition is provided and laminated to the inner side of the oxygen gas barrier layer (21 b), by means of extrusion coating or co-extrusion coating onto the coated paperboard.

Q. Method according to any one of clauses N-P, wherein the water vapour barrier layer (23b; 23c) of the melt processable polymer composition is provided by extrusion or co-extrusion casting or blowing of a film, which is subsequently laminated to the inner side of the oxygen gas barrier layer (21 b), by means of extrusion laminating with an intermediate thermoplastic bonding layer (16; 24b; 24c).

R. Method according to any one of clauses P or Q, wherein an innermost layer(s) (17) of a heat sealable polyolefin is provided on the inside of the water vapour barrier layer (24a) by being co-extrusion formed in the same step and together with the water vapour barrier layer (24a; 23b; 23c).

S. Method according to any one clauses N-R, characterised in that said water vapour barrier layer (24a; 23b; 23c) is bonded to the barrier-coated paper or paperboard layer by an intermediate thermoplastic polymer layer (13) selected from polyolefins and polyolefin-based adhesive polymers.

T. Packaging container (50a; 50b) manufactured from the packaging laminate (10a; 10b; 10c) as specified in any one of clauses A-M.

**Claims**

1. A non-foil packaging laminate (10) for packaging of liquid food or beverage, the packaging laminate comprising a first layer of paper (11), which first paper layer (11) is situated towards the inner side of the laminated packaging material and a second layer of paper (12) situated towards the outer side of the laminated packaging material, said first and second paper layers being laminated to each other by means of a first intermediate bonding layer (13) in a sandwich structure, the packaging laminate further comprising a gas barrier coating layer (14), coated onto the inner side of the first paper layer by liquid film coating of a liquid gas barrier composition onto said first paper layer and subsequent drying, the liquid composition containing a polymer binder dispersed or dissolved in an aqueous or solvent medium, and a further barrier layer towards water vapour (15) laminated and bonded to the barrier-coated inside of the first paper layer by means of a second intermediate polymer bonding layer (16), the packaging laminate further comprising an innermost layer of liquid tight, heat sealable thermoplastic polymer material (17) applied on the inner side of the further barrier layer (15), and an outermost layer of liquid tight, heat sealable thermoplastic polymer material (18) on the opposite side of the packaging laminate, applied on the outer side of the second, core paper layer.

2. Packaging laminate according to claim 1, **characterised in that** the second paper layer is a core paperboard layer providing the final package with fold-forming dimensional stability by means of its significantly higher stiffness properties.

3. Packaging laminate according to any one of claim 1 or 2, **characterised in that** it has an additional gas barrier coating layer (14a) coated onto the outer side of the first paper layer.

4. Packaging laminate according to any one of claims 1-3, **characterised in that** it has an additional gas barrier coating layer (14b) coated onto the inner side of the second paper layer.

5. Packaging laminate according to any one of claims 1-4, **characterised in that** the gas barrier coating layer(s) (14, 14a, 14b) is formed from a composition mainly comprising a gas barrier polymer selected from the group consisting of polyvinyl alcohol (PVOH), water dispersible polyvinylidene chloride (PVDC), water dispersible ethylene vinyl alcohol (EVOH), polysaccharides, including starch and starch derivatives, water dispersible polyamide (PA), and combinations of two or more thereof.

6. Packaging laminate according to any one of claims 1-5, **characterised in that** said liquid composition further comprises inorganic particles.

7. Packaging laminate according to any one of claims 1-6, **characterised in that** said oxygen gas barrier layer (14) is applied at a total amount of from 0,1 to 5 g/m$^2$, preferably from 0,5 to 3,5 g/m$^2$, more preferably 0,5 to 3 g/m$^2$, dry weight.

8. Packaging laminate according to any one of claims 1-7, characterised i n that said further barrier layer towards water vapour (15) is a vapour deposition coating layer deposited onto a polymer substrate film.

9. Packaging laminate according to claim 8, **characterised in that** said vapour deposition coating layer is deposited onto a polymer substrate film, which polymer substrate film includes an innermost heat sealable thermoplastic material layer (17).

10. Packaging laminate according to any one of claims 8-9, c h a r a c t e r i s e d i n that the vapour deposition coating layer (15) is a layer substantially consisting of aluminium with an optical density (OD) of from 1 to 3, preferably-of from 1,5 to 2,5.

11. Packaging laminate according to any one of claims 1-7, **characterised in that** said further barrier layer towards water vapour (15) comprises a polyolefin-based matrix polymer and inorganic filler particles distributed within the matrix polymer.

12. Packaging laminate according to any one of the preceding claims, **characterised in** that the first, inner layer of paper (11) has a surface weight of from 10 to 100 g / m2, preferably from 20 to 70 g/m2, more preferably from 20-50 g/m2.

13. Packaging laminate according to any one of the preceding claims, c h a r a c t e r i s e d i n that the second intermediate bonding layer(16) is a layer of an extrusion laminated thermoplastic polymer.

14. Method of manufacturing a non-foil packaging laminate (10) according to any one of claims 1-13, comprising the steps of

- providing a first, inner layer of paper (21),
- providing a liquid gas barrier composition containing a polymer binder dispersed or dissolved in an aqueous or solvent-based liquid medium,
- forming a thin oxygen gas barrier layer comprising said polymer binder by coating (22a) the liquid composition onto a first, inner side of said layer of paper and subsequently drying (22b) to evaporate the liquid,
- providing a polymer substrate film (23),
- vapour depositing a barrier layer (14; 23a) onto the substrate polymer film,
- laminating the vapour deposited film (23) to the inner side of the oxygen gas barrier layer (21 b) by means of a second intermediate polymer bonding layer (16),
- providing a second, outer layer of paper (12),
- laminating the first and second paper layers to each other by means of a first intermediate bonding layer of thermoplastic polymer (13)
- providing an innermost layer (17) of a heat sealable polymer inside of the vapour deposited layer (15), and at any stage of the method
- providing an outermost layer (18) of a heat sealable thermoplastic polymer material outside of the second paper layer (12) on the outermost, opposite side, of the packaging laminate (10).

15. Method of manufacturing a non-foil packaging laminate (10) according to claim 14, wherein the second paper layer is a core layer providing the final package with fold-forming dimensional stability by means of its significantly higher thickness and stiffness properties, compared to the first paper layer.

16. Method according to any one of claims 14-15 wherein the oxygen gas barrier polymer contained in the liquid composition is selected from a group consisting of polyvinyl alcohol (PVOH), water dispersible polyvinylidene chloride (PVDC), water dispersible ethylene vinyl alcohol (EVOH), polysaccharides, including starch and starch derivatives, water dispersible polyamide (PA) and combinations of two or more thereof, and wherein the water vapour barrier layer (15) is a metal vapour deposition layer.

17. Packaging container (50a; 50b) manufactured from the non-foil laminated material (10a; 10b) as specified in any one of claims 1-13.

**Patentansprüche**

1. Nichtfolien-Verpackungslaminat (10) zum Verpacken von flüssigen Lebensmitteln oder Getränken, wobei das Verpackungslaminat eine erste Papierschicht (11) umfasst, wobei die erste Papierschicht (11) zu der Innenseite des laminierten Verpackungsmaterials gerichtet angeordnet ist, und eine zweite Papierschicht (12), die zu der Außenseite des laminierten Verpackungsmaterials gerichtet angeordnet ist, wobei die erste und die zweite Papierschicht mithilfe einer ersten Binde-Zwischenschicht (13) zu einer Sandwichstruktur aneinander laminiert sind, wobei das Verpackungslaminat ferner eine Gasbarriereschicht (14) umfasst, die durch Flüssigfilmbeschichtung einer flüssigen Gasbarrierezusammensetzung und anschließendes Trocknen auf die Innenseite der ersten Papierschicht geschichtet ist, wobei die flüssige Zusammensetzung ein in einem wässrigen oder Lösungsmittel-Medium dispergiertes oder gelöstes polymeres Bindemittel enthält, und eine weitere Barriereschicht gegen Wasserdampf (15), die mithilfe einer zweiten polymeren Binde-Zwischenschicht (16) auf die barrierebeschichtete Innenseite der ersten Papierschicht laminiert und daran gebunden ist, wobei das Verpackungslaminat ferner eine innerste Schicht aus flüssigkeitsdichtem, heißsiegelfähigem thermoplastischem Polymermaterial (17) umfasst, die auf die Innenseite der weiteren Barriereschicht (15) aufgebracht ist, und eine äußerste Schicht aus flüssigkeitsdichtem, heißsiegelfähigem thermoplastischem Polymermaterial (18) an der gegenüberliegenden Seite des Verpackungslaminats, die auf die Außenseite der zweiten Papierkernschicht aufgebracht ist.

2. Verpackungslaminat gemäß Anspruch 1, **dadurch gekennzeichnet, dass** die zweite Papierschicht eine Karton-Kernschicht ist, die der fertigen Verpackung durch ihre wesentlich stärkeren Steifigkeitseigenschaften falzbildende Formstabilität verleiht.

3. Verpackungslaminat gemäß einem der Ansprüche 1 oder 2, **dadurch gekennzeichnet, dass** es eine zusätzliche Gasbarriereschicht (14a) aufweist, die auf die Außenseite der ersten Papierschicht geschichtet ist.

4. Verpackungslaminat gemäß einem der Ansprüche 1-3, **dadurch gekennzeichnet, dass** es eine zusätzliche Gasbarriereschicht (14b) aufweist, die auf die Innenseite der zweiten Papierschicht geschichtet ist.

5. Verpackungslaminat gemäß einem der Ansprüche 1-4, **dadurch gekennzeichnet, dass** die Gasbarriereschicht(en) (14, 14a, 14b) aus einer Zusammensetzung bestehen, die hauptsächlich ein Gasbarrierepolymer ausgewählt aus der Gruppe bestehend aus Polyvinylalkohol (PVOH), wasserdispergierbarem Polyvinylidenchlorid (PVDC), wasserdispergierbarem Ethylenvinylalkohol (EVOH), Polysacchariden, einschließlich Stärke und Stärkederivate, wasserdispergierbarem Polyamid (PA) und Kombinationen von zwei oder mehr davon umfasst.

6. Verpackungslaminat gemäß einem der Ansprüche 1-5, **dadurch gekennzeichnet, dass** die flüssige Zusammensetzung ferner anorganische Partikel umfasst.

7. Verpackungslaminat gemäß einem der Ansprüche 1-6, **dadurch gekennzeichnet, dass** die Sauerstoffgasbarriereschicht (14) in einer Gesamtmenge von 0,1 bis 5 g/m$^2$, vorzugsweise von 0,5 bis 3,5 g/m$^2$, bevorzugter 0,5 bis 3 g/m$^2$, Trockengewicht aufgebracht ist.

8. Verpackungslaminat gemäß einem der Ansprüche 1-7, **dadurch gekennzeichnet, dass** die weitere Barriereschicht gegen Wasserdampf (15) eine auf einen Polymersubstratfilm aufgebrachte Aufdampfschicht ist.

9. Verpackungslaminat gemäß Anspruch 8, **dadurch gekennzeichnet, dass** die Aufdampfschicht auf einen Polymersubstratfilm aufgebracht ist, welcher Polymersubstratfilm eine innerste heißsiegelfähige thermoplastische Materialschicht (17) umfasst.

10. Verpackungslaminat gemäß einem der Ansprüche 8-9, **dadurch gekennzeichnet, dass** die Aufdampfschicht (15) eine Schicht ist, die im Wesentlichen aus Aluminium mit einer optischen Dichte (OD) von 1 bis 3, vorzugsweise von 1,5 bis 2,5, besteht.

11. Verpackungslaminat gemäß einem der Ansprüche 1-7, **dadurch gekennzeichnet, dass** die weitere Barriereschicht gegen Wasserdampf (15) ein Matrixpolymer auf Polyolefinbasis und in dem Matrixpolymer verteilte anorganische Füllstoffpartikel umfasst.

12. Verpackungslaminat gemäß einem der vorstehenden Ansprüche, **dadurch gekennzeichnet, dass** die erste, innere Papierschicht (11) ein Flächengewicht von 10 bis 100 g/m$^2$ aufweist, vorzugsweise von 20 bis 70 g/m$^2$, bevorzugter

20-50 g/m$^2$.

**13.** Verpackungslaminat gemäß einem der vorstehenden Ansprüche, **dadurch gekennzeichnet, dass** die zweite Binde-Zwischenschicht (16) eine Schicht aus einem extrusionslaminierten thermoplastischen Polymer ist.

**14.** Verfahren zum Herstellen eines Nichtfolien-Verpackungslaminats (10) gemäß einem der Ansprüche 1-13, umfassend die Schritte

   - Bereitstellen einer ersten, inneren Papierschicht (21),
   - Bereitstellen einer flüssigen Gasbarrierezusammensetzung, die ein polymeres Bindemittel enthält, das in einem flüssigen Medium auf Wasser- oder Lösungsmittelbasis dispergiert oder gelöst ist,
   - Bilden einer dünnen Sauerstoffgasbarriereschicht, die das polymere Bindemittel enthält, durch Aufschichten (22a) der flüssigen Zusammensetzung auf eine erste, innere Seite der Papierschicht und anschließend Trocknen (22b) zum Verdunsten der Flüssigkeit,
   - Bereitstellen eines Polymersubstratfilms (23),
   - Aufdampfen einer Barriereschicht (14; 23a) auf den Substrat-Polymerfilm,
   - Laminieren des aufgedampften Films (23) auf die Innenseite der Sauerstoffgasbarriereschicht (21b) mithilfe einer zweiten polymeren Binde-Zwischenschicht (16),
   - Bereitstellen einer zweiten, äußeren Papierschicht (12),
   - Aneinanderlaminieren der ersten und der zweiten Papierschicht mithilfe einer ersten Binde-Zwischenschicht aus thermoplastischem Polymer (13),
   - Bereitstellen einer innersten Schicht (17) aus einem heißsiegelfähigen Polymer innerhalb der dampfabgeschiedenen Schicht (15), und bei einer beliebigen Stufe des Verfahrens
   - Bereitstellen einer äußersten Schicht (18) aus einem heißsiegelfähigen thermoplastischen Polymermaterial außerhalb der zweiten Papierschicht (12) auf der äußersten, gegenüber liegenden Seite des Verpackungslaminats (10).

**15.** Verfahren zum Herstellen eines Nichtfolien-Verpackungslaminats (10) gemäß Anspruch 14, wobei die zweite Papierschicht eine Kernschicht ist, die der fertigen Verpackung durch ihre wesentlich größere Dicke und stärkere Steifigkeitseigenschaften im Vergleich zu der ersten Papierschicht falzbildende Formstabilität verleiht.

**16.** Verfahren gemäß einem der Ansprüche 14-15, wobei das in der flüssigen Zusammensetzung enthaltene Sauerstoffgasbarrierepolymer ausgewählt ist aus der Gruppe bestehend aus Polyvinylalkohol (PVOH), wasserdispergierbarem Polyvinylidenchlorid (PVDC), wasserdispergierbarem Ethylenvinylalkohol (EVOH), Polysacchariden, einschließlich Stärke und Stärkederivate, wasserdispergierbarem Polyamid (PA) und Kombinationen von zwei oder mehr davon und wobei die Wasserdampfbarriereschicht (15) eine Metall-Aufdampfschicht ist.

**17.** Verpackungsbehälter (50a; 50b), hergestellt aus dem Nichtfolien-Laminatmaterial (10a; 10b) gemäß einem der Ansprüche 1-13.

## Revendications

**1.** Stratifié d'emballage sans feuille métallique (10) destiné à l'emballage d'aliments liquides ou de boissons, le stratifié d'emballage comprenant une première couche de papier (11), laquelle première couche de papier (11) est située vers le côté interne du matériau d'emballage stratifié, et une deuxième couche de papier (12) située vers le côté externe du matériau d'emballage stratifié, lesdites première et deuxième couches de papier étant assemblées l'une avec l'autre par stratification au moyen d'une première couche de liaison intermédiaire (13) dans une structure en sandwich, le stratifié d'emballage comprenant en outre une couche de revêtement formant une barrière aux gaz (14), appliquée de façon à former un revêtement sur le côté interne de la première couche de papier par application sous forme de film liquide d'une composition liquide de barrière aux gaz sur ladite première couche de papier puis séchage, la composition liquide contenant un liant polymère dispersé ou dissous dans un milieu aqueux ou solvant, et une couche barrière supplémentaire s'opposant au passage de la vapeur d'eau (15) appliquée par stratification et fixée sur l'intérieur revêtu d'une barrière de la première couche de papier au moyen d'une deuxième couche de liaison intermédiaire de polymère (16), le stratifié d'emballage comprenant en outre une couche située le plus à l'intérieur de matériau polymère thermoplastique thermoscellable, étanche aux liquides (17), appliquée sur le côté interne de la couche barrière supplémentaire (15), et une couche située le plus à l'extérieur de matériau polymère thermoplastique thermoscellable, étanche aux liquides (18), sur le côté opposé du stratifié d'emballage, appliquée sur le côté externe de la deuxième couche centrale de papier.

2. Stratifié d'emballage selon la revendication 1, **caractérisé en ce que** la deuxième couche de papier est une couche centrale de carton apportant à l'emballage final une stabilité dimensionnelle en cas de mise en forme par pliage par ses propriétés de rigidité significativement supérieures.

3. Stratifié d'emballage selon l'une quelconque des revendications 1 ou 2, **caractérisé en ce qu'**il comporte une couche additionnelle de revêtement formant une barrière aux gaz (14a) appliquée de façon à former un revêtement sur le côté externe de la première couche de papier.

4. Stratifié d'emballage selon l'une quelconque des revendications 1 à 3, **caractérisé en ce qu'**il comporte une couche additionnelle de revêtement formant une barrière aux gaz (14b) appliquée de façon à former un revêtement sur le côté interne de la deuxième couche de papier.

5. Stratifié d'emballage selon l'une quelconque des revendications 1 à 4, **caractérisé en ce que** la/les couche(s) de revêtement formant une barrière aux gaz (14, 14a, 14b) est/sont formée(s) d'une composition comprenant essentiellement un polymère formant une barrière aux gaz sélectionné dans le groupe constitué de l'alcool polyvinylique (PVOH), du chlorure de polyvinylidène (PVDC) dispersible dans l'eau, de l'éthylène-alcool vinylique (EVOH) dispersible dans l'eau, de polysaccharides, y compris l'amidon et les dérivés d'amidon, d'un polyamide (PA) dispersible dans l'eau, et de combinaisons de deux de ceux-ci ou plus.

6. Stratifié d'emballage selon l'une quelconque des revendications 1 à 5, **caractérisé en ce que** ladite composition liquide comprend en outre des particules inorganiques.

7. Stratifié d'emballage selon l'une quelconque des revendications 1 à 6, **caractérisé en ce que** ladite couche formant une barrière au gaz oxygène (14) est appliquée dans une quantité totale de 0,1 g/m$^2$ à 5 g/m$^2$, préférablement de 0,5 g/m$^2$ à 3,5 g/m$^2$, plus préférablement de 0,5 g/m$^2$ à 3 g/m$^2$, en poids sec.

8. Stratifié d'emballage selon l'une quelconque des revendications 1 à 7, **caractérisé en ce que** ladite couche barrière supplémentaire s'opposant au passage de la vapeur d'eau (15) est une couche de revêtement formé par dépôt en phase vapeur déposée sur un film de substrat polymère.

9. Stratifié d'emballage selon la revendication 8, **caractérisé en ce que** ladite couche de revêtement formé par dépôt en phase vapeur est déposée sur un film de substrat polymère, lequel film de substrat polymère comprend une couche de matériau thermoplastique thermoscellable située le plus à l'intérieur (17).

10. Stratifié d'emballage selon l'une quelconque des revendications 8 ou 9, **caractérisé en ce que** la couche de revêtement formé par dépôt en phase vapeur (15) est une couche constituée essentiellement d'aluminium, ayant une densité optique (DO) de 1 à 3, préférablement de 1,5 à 2,5.

11. Stratifié d'emballage selon l'une quelconque des revendications 1 à 7, **caractérisé en ce que** ladite couche barrière supplémentaire s'opposant au passage de la vapeur d'eau (15) comprend un polymère de matrice à base de polyoléfine(s) et des particules de charge inorganiques réparties à l'intérieur du polymère de matrice.

12. Stratifié d'emballage selon l'une quelconque des revendications précédentes, **caractérisé en ce que** la première couche de papier interne (11) a un poids superficiel de 10 g/m$^2$ à 100 g/m$^2$, préférablement de 20 g/m$^2$ à 70 g/m$^2$, plus préférablement de 20 g/m$^2$ à 50 g/m$^2$.

13. Stratifié d'emballage selon l'une quelconque des revendications précédentes, **caractérisé en ce que** la deuxième couche de liaison intermédiaire (16) est une couche d'un polymère thermoplastique appliqué en utilisant un procédé de stratification par extrusion.

14. Procédé de fabrication d'un stratifié d'emballage sans feuille métallique (10) selon l'une quelconque des revendications 1 à 13, comprenant les étapes qui consistent à :

    - fournir une première couche de papier interne (21),
    - fournir une composition liquide de barrière aux gaz contenant un liant polymère dispersé ou dissous dans un milieu liquide aqueux ou à base de solvant,

- former une couche mince formant une barrière au gaz oxygène comprenant ledit liant polymère, en appliquant la composition liquide de façon à former un revêtement (22a) sur un premier côté interne de ladite couche de papier, avec ensuite un séchage (22b) pour faire évaporer le liquide,
- fournir un film de substrat polymère (23),
- déposer en phase vapeur une couche barrière (14 ; 23a) sur le film de polymère utilisé comme substrat,
- assembler par stratification le film formé par dépôt en phase vapeur (23) avec le côté interne de la couche formant une barrière au gaz oxygène (21b) au moyen d'une deuxième couche de liaison intermédiaire de polymère (16),
- fournir une deuxième couche de papier externe (12),
- assembler par stratification les première et deuxième couches de papier l'une avec l'autre au moyen d'une première couche de liaison intermédiaire de polymère thermoplastique (13),
- disposer une couche située le plus à l'intérieur (17) d'un polymère thermoscellable à l' intérieur de la couche formée par dépôt en phase vapeur (15), et à n'importe quel stade du procédé,
- disposer une couche située le plus à l'extérieur (18) d'un matériau polymère thermoplastique thermoscellable à l'extérieur de la deuxième couche de papier (12) sur le côté opposé, situé le plus à l'extérieur, du stratifié d'emballage (10).

15. Procédé de fabrication d'un stratifié d'emballage sans feuille métallique (10) selon la revendication 14, dans lequel la deuxième couche de papier est une couche centrale apportant à l'emballage final une stabilité dimensionnelle en cas de mise en forme par pliage par ses propriétés d'épaisseur et de rigidité significativement supérieures à celles de la première couche de papier.

16. Procédé selon l'une quelconque des revendications 14 ou 15, dans lequel le polymère formant une barrière au gaz oxygène contenu dans la composition liquide est sélectionné dans le groupe constitué de l'alcool polyvinylique (PVOH), du chlorure de polyvinylidène (PVDC) dispersible dans l'eau, de l'éthylène-alcool vinylique (EVOH) dispersible dans l'eau, de polysaccharides, y compris l'amidon et les dérivés d'amidon, d'un polyamide (PA) dispersible dans l'eau, et de combinaisons de deux de ceux-ci ou plus, et dans lequel la couche formant une barrière à la vapeur d'eau (15) est une couche de métal formée par dépôt en phase vapeur.

17. Récipient d'emballage (50a ; 50b) fabriqué à partir du matériau stratifié sans feuille métallique (10a ; 10b) selon l'une quelconque des revendications 1 à 13.

(10a)

Fig 1a

(10b)

Fig 1b

(10c)

Fig 1c

(10d)

*Fig 1d*

18
12
14b
13
14a
11
14
16
15
17

(10e)

*Fig 1e*

18
12
13
11
14
16
15
17

(10f)

*Fig 1f*

18
12
13
11
14
16
15
17

*Fig 2a*

*Fig 2b*

*Fig 2c*

*Fig 2d*

34

32

30

36

34a

38

*Fig 3*

*Fig 4*

*Fig 5a*

50b

52b

51b

52b

*Fig 56*

Fig 6

OTR (cc/m², day, atm, 100% oxygen, 23 C, 50% RH)

*Fig 7*

EP 2 451 641 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1920919 A
- EP 608808 A
- EP 1086981 A
- WO 02005037535 A
- WO 03031720 A